# EUROPEAN PATENT APPLICATION

(11) **EP 2 573 657 A1**
(43) Date of publication of application: **27.03.2013**
(21) Application number: 11783187.5
(22) Date of filing: 08.03.2011
(51) Int. Cl.: G06F 3/041, G06F 3/023, G06F 3/048, H03M 11/04, H04M 1/00

(54) **MOBILE TERMINAL, INFORMATION PROCESSING METHOD, AND PROGRAM**

(30) Priority: 21.05.2010 JP 2010117295
(71) Applicant: Panasonic Corporation, Kadoma-shi Osaka 571-8501 (JP)
(72) Inventor: NAKAMURA, Tomoharu, Osaka 540-6207 (JP); ANZAI, Jun, Osaka 540-6207 (JP); LI, Ying, Osaka 540-6207 (JP)
(74) Representative: Grünecker, Kinkeldey, Stockmair & Schwanhäusser
(86) International application number: PCT/JP2011/001364
(87) International publication number: WO 2011/145248

(57) **Abstract**

It enables a user to rapidly perform operations for operation items having a hierarchical structure by a continuous operation that is intuitive and simple. It includes a display part that displays information or data, a contact detection unit that detects a contact of the display part with fingers of a user, a finger number determination unit that determines the number of fingers of the user for the contact detected by the contact detection unit, a storage unit that stores hierarchy information of a plurality of operation items for the information or data, and a hierarchy selection unit that selects a hierarchy which coincides with the number of fingers detected by the finger number determination unit among the hierarchy information stored in the storage unit, as an operation item for the contact detected by the contact detection unit.

## Description

### Technical Field

The present invention relates to a mobile terminal, an information processing method, and a program, which make it possible to operate operation items that are configured to have a hierarchical structure, depending on the number of fingers that touch a display screen.

### Background Art

Recently, according to technical advancement, mobile terminals such as mobile phones have been multi-functionalized, and operation items that are used in functions of such mobile terminals have been increased. Here, the "operation items" include a service that corresponds to the function of each mobile terminal, a service provider that provides the service, content provided by the service provider, and a sub-menu such as image editing of content or sound change during reproduction of the content. In general, higher rank and lower rank hierarchical relations are established between such operation items, and the relations between an arbitrary operation item and other operation items may be expressed as a hierarchical structure. The explanation relating to the operation items is similar in the following.

For example, the operation items that include the service, the content, and the sub-menu may be expressed by a hierarchical structure in a manner that the above-described service is set to the highest rank operation item, the above-described content is set to an operation item that is one below the service that is the highest rank operation item, and lastly, the above-described sub-menu is set to an operation item that is two below the highest rank operation item and is one below the content as well.

In a mobile terminal in which operation items having such a hierarchical structure have been configured in advance, in order to make it possible to operate the mobile terminal without giving a burden to a user, a touch panel is often installed on the display screen of the mobile terminal. The user can easily operate the mobile terminal in which operation items having a complicated hierarchical structure are set by inputting an operation instruction to the touch panel. Patent Literature 1 discloses relations between the operation on a touch panel and data having the hierarchical structure. Further, Patent Literature 2 discloses relations between the number of fingers that touch the touch panel and functions that are executed depending on the number of fingers.

For example, in Patent Literature 1, an information input device is disclosed which detects the contact of a finger on a touch panel, determines which finger of an operator is contacting the touch panel, registers commands in connection to the finger or a combination of fingers, and executes a command that is registered depending on the determined finger or combination of fingers. According to the information input device disclosed in Patent Literature 1, the contents of the command that is called by touching the touch panel or a calling method of the command can be flexibly set.

For example, Patent Literature 2 discloses a computer execution method and a computer readable medium, which receive an input including plural and simultaneous touch screen contacts from a user of a touch screen device, identify an operation that is performed in response to the input by identifying attributes of the plural and simultaneous touch screen contacts, and perform an accessibility switching assistance operation on a computing system in response to the input if the input is predetermined to correspond to the operation. According to the computer execution method and the computer readable medium disclosed in Patent Literature 2, a user can accurately operate a pointer by putting a finger on a region that is displayed by touch pointer widget and dragging the finger.

### Citation List

### Patent Literature

Patent Literature 1: JP-A-2008-123032
Patent Literature 2: JP-T-2009-537051

### Summary of Invention

### Technical Problem

In Patent Literature 1, the correlation between the kind of the finger and the command is predetermined. However, in order for the information input device disclosed in Patent Literature 1 to instruct a desired command by the user, the user needs an operation to trace the hierarchy and instruct the desired command, and such an operation is complicated.

Further, in Patent Literature 2, the operation for data having a hierarchical structure, such as a digital TV, is not assumed, and narrowing down of an operation target and the operation with respect to the operation target are unable to be continuously performed.

Accordingly, an object of the present invention is to provide a mobile terminal, an information processing method, and a program, which can rapidly perform operations for operation items having a hierarchical structure by an operation that is quite intuitive and simple.

A mobile terminal according to an aspect of the present invention includes: a display part that displays information or data; a contact detection unit that detects a contact of the display part with fingers of a user; a finger number determination unit that determines the number of fingers of the user for the contact detected by the contact detection unit; a storage unit that stores hierarchy information of a plurality of operation items for the information or data; and a hierarchy selection unit that selects a hierarchy which coincides with the number of fingers detected by the finger number determination unit among the hierarchy information stored in the storage unit, as an operation item for the contact detected by the contact detection unit.

An information processing method according to an aspect of the present invention includes the steps of: displaying information or data on a display part; detecting a contact of the display part with fingers of a user; detecting the number of fingers of the user for the contact detected; storing hierarchy information of a plurality of operation items for the information or data in a storage unit; and selecting a hierarchy which coincides with the detected number of fingers among the hierarchy information stored in the storage unit, as an operation item for the contact detected.

A program according to an aspect of the present invention causes a mobile terminal that is a computer to implement the steps of: displaying information or data on a display part; detecting a contact of the display part with fingers of a user; detecting the number of fingers of the user for the contact detected; storing hierarchy information of a plurality of operation items for the information or data in a storage unit; and selecting a hierarchy which coincides with the detected number of fingers among the hierarchy information stored in the storage unit, as an operation item for the contact detected.

According to the above-described configuration, it is possible to rapidly perform operations with respect to the operation items having a hierarchical structure by a continuous operation that is quite intuitive and simple.

### Advantageous Effects of Invention

According to the mobile terminal, the information processing method and the program, it becomes possible to rapidly perform operations for the operation items having a hierarchical structure by a continuous operation that is quite intuitive and simple.

### Brief Description of Drawings

Fig. 1 is a perspective view illustrating a horizontally open state of a mobile phone that is a mobile terminal according to each embodiment.
Fig. 2 is a perspective view illustrating a vertically open state of a mobile phone that is a mobile terminal according to each embodiment.
Fig. 3 is a perspective view illustrating a closed state of a mobile phone that is a mobile terminal according to each embodiment.
Fig. 4 is a block diagram illustrating the internal configuration of a mobile phone that is a mobile terminal according to a first embodiment.
Fig. 5 is a schematic diagram illustrating operation items of a mobile phone that is a mobile terminal, which are expressed as a hierarchical structure according to the first embodiment.
Fig. 6 is an explanatory diagram illustrating operation item hierarchy information in the form of a table.
Fig. 7 is an explanatory diagram illustrating temporarily set hierarchy information in the form of a table.
Fig. 8 is an explanatory diagram illustrating the operation summary of a mobile phone that is a mobile terminal according to the first embodiment.
Fig. 9 is a flowchart illustrating the operation of a mobile phone that is a mobile terminal according to the first embodiment.
Fig. 10 is a block diagram illustrating the internal configuration of a mobile phone that is a mobile terminal according to a second embodiment.
Fig. 11 is an explanatory diagram illustrating addition numerical value condition information in the form of a table.
Fig. 12 is an explanatory diagram illustrating the operation summary of a mobile phone that is a mobile terminal according to the second embodiment.
Fig. 13 is a flowchart illustrating the operation of a mobile phone that is a mobile terminal according to the second embodiment.
Fig. 14 is a block diagram illustrating the internal configuration of a mobile phone that is a mobile terminal according to a third embodiment.
Fig. 15 is an explanatory diagram illustrating display range condition information in the form of a table.
Fig. 16 is an explanatory diagram illustrating the operation summary of a mobile phone that is a mobile terminal according to the third embodiment.
Fig. 17 is a flowchart illustrating a part of the operation of a mobile phone that is a mobile terminal according to the third embodiment.
Fig. 18 is a flowchart illustrating a part of the operation of a mobile phone that is a mobile terminal according to the third embodiment.
Fig. 19 is a flowchart illustrating a part of the operation of a mobile phone that is a mobile terminal according to a modified example of the third embodiment.
Fig. 20 is a flowchart illustrating a part of the operation of a mobile phone that is a mobile terminal according to a modified example of the third embodiment.
Fig. 21 is a schematic diagram illustrating another example of operation items of a mobile phone that is a mobile terminal, which are expressed as a hierarchical structure according to each embodiment.
Fig. 22 is an explanatory diagram illustrating the operation summary of a mobile phone that is a mobile terminal according to a modified example of each embodiment.

### Description of Embodiments

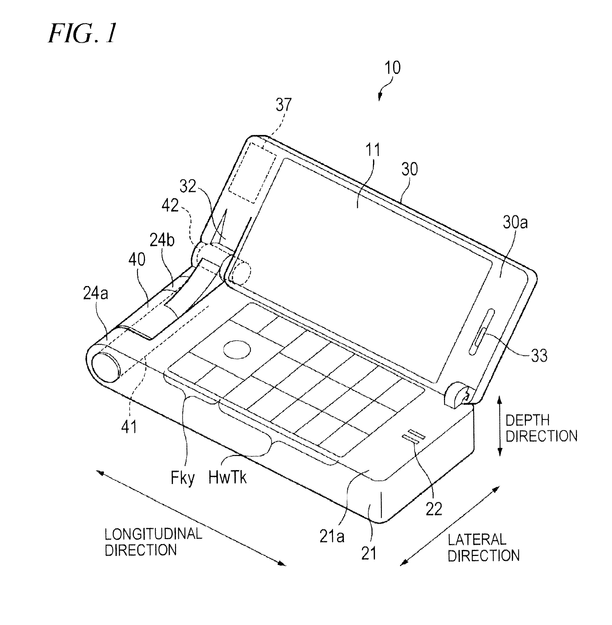

Hereinafter, embodiments of the present invention will be described with reference to the drawings. In each of the following embodiments, a mobile phone 10 illustrated in Figs. 1 to 3 is exemplified as a mobile terminal according to an aspect of the present invention. However, the mobile terminal according to the present invention is not limited to the mobile phone 10. The present invention can be expressed as a device such as the mobile phone 10 illustrated in Figs. 1 to 3, or a "program" for operating a computer that is the device. Further, the present invention can also be expressed as a "method" that includes steps executed by the mobile phone 10. That is, the present invention can express any category in the device, method, and program.

### [First embodiment]

### 1. External appearance of mobile phone 10 that is a mobile terminal according to the present invention

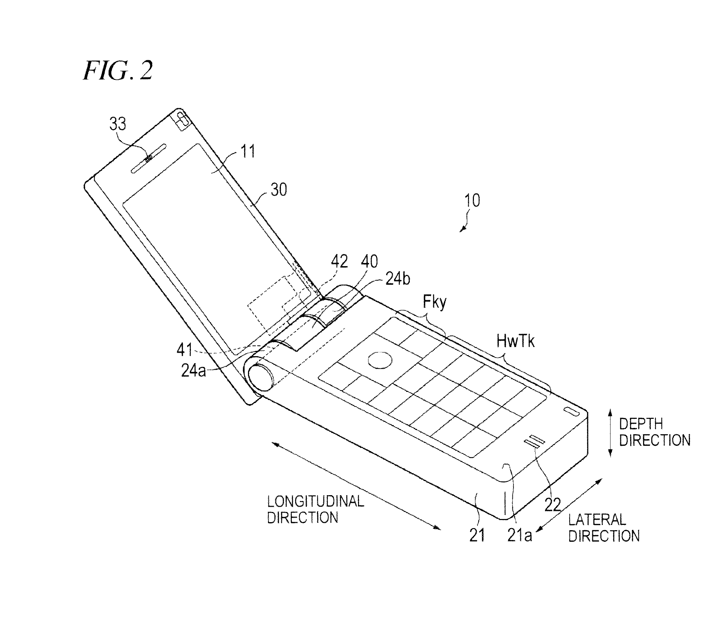

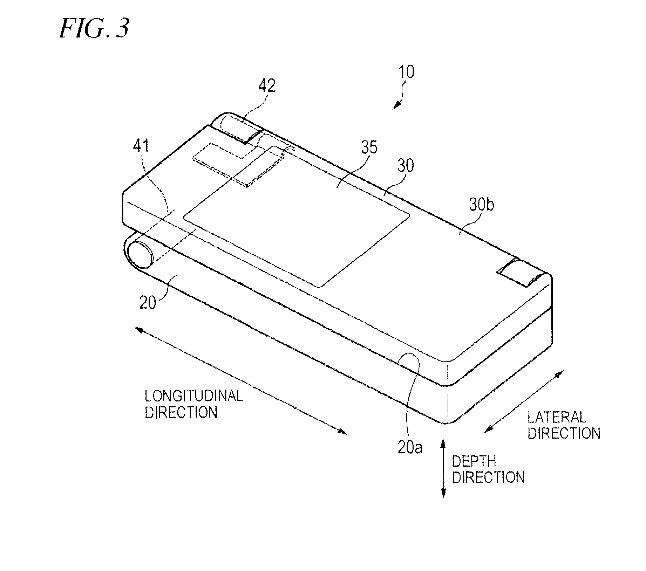

Fig. 1 is a perspective view illustrating a horizontally open state of a mobile phone 10 that is a mobile terminal according to a first embodiment. Fig. 2 is a perspective view illustrating a vertically open state of a mobile phone 10 that is a mobile terminal according to the first embodiment. Fig. 3 is a perspective view illustrating a closed state of a mobile phone 10 that is a mobile terminal according to the first embodiment.

As illustrated in Figs. 1 to 3, the mobile phone 10 includes a first housing 21 of a rectangular box shape, a second housing 30 of a rectangular box shape, and a coupling portion 40 connecting the first housing 21 and the second housing 30. In the mobile phone 10, the first housing 21 and the coupling portion 40 are connected through a first rotary shaft 41, and the second housing 30 and the coupling portion 40 are connected through a second rotary shaft 42.

Hereinafter, a direction according to an arrangement of the first housing 21 and the coupling portion 40 is called a longitudinal direction, a direction that is orthogonal to the longitudinal direction is called a lateral direction, and a direction that is orthogonal to both the longitudinal direction and the lateral direction is called a depth direction of the first housing 21. In the same manner, as shown in Fig. 3, the longitudinal direction, lateral direction, and depth direction of the second housing 30 correspond to the longitudinal direction, lateral direction, and depth direction of the first housing 21.

As shown in Fig. 3, the mobile phone 10 may take a closed state where the first housing 21 and the second housing 30 are relatively stacked, a vertically open state where the second housing 30 and the coupling portion 40 are integrally rotated with respect to the first housing 21 about the first rotary shaft 41, starting from the closed state as shown in Fig. 2, or a horizontally open state where the second housing 30 is rotated with respect to the first housing 21 about the second rotary shaft 42, starting from the closed state as shown in Fig. 1.

The first housing 21 is a portion that a user holds with one hand or both hands when the user uses the mobile phone 10, and is provided with a hardware numeric keypad HwTk for inputting a number or a letter and function keys Fky for performing calling, cutoff, various kinds of settings or function switching, which are provided on an operation surface 21a.

According to the first housing 21, a pair of first housing support portions 24a and 24b are provided at an end portion on the side of the function keys Fky which is an end portion on one side along the longitudinal direction, and a microphone 22 is provided on the operation surface 21a at an end portion on the other side along the longitudinal direction. The microphone 22 is to collect user's voice when the mobile phone 10 is in the vertically open state to use the mobile phone 10 as a telephone.

The second housing 30 is provided with a display part 11 such as an LCD (Liquid Crystal Display) provided on a display surface 30a that faces the operation surface 21a of the first housing 21 when the mobile phone 10 is in the closed state as shown in Fig. 3, and a sub-display part 35 provided on an outer surface 30b that is opposite to the display surface 30a. The display part 11 is used as a display screen for games or digital TV broadcasts when the mobile phone 10 is in the vertically open state or in the horizontally open state.

The second housing 30 is also provided with a sound emission unit 33 which is provided at the end portion on one side along the longitudinal direction on the display surface 30a to generate transmitted sound or the like in a state where it is put in the ear of the user when the mobile phone 10 is in the vertically open state to be used as the telephone, a concave portion 32 provided at the end portion on the other side of the coupling portion 40 along the longitudinal direction as shown in Fig. 1, and an antenna 37. The antenna 37 is built in the second housing 30.

### 2. Configuration of mobile phone 10 according to the first embodiment

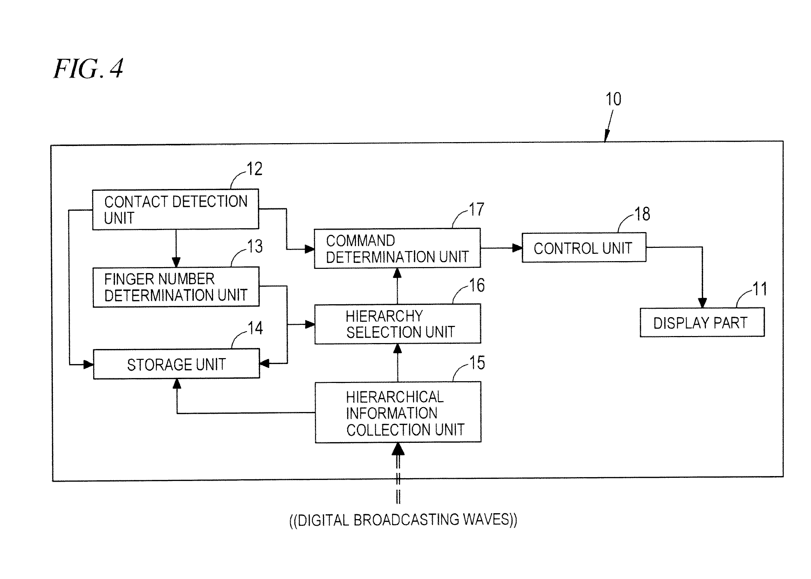

Fig. 4 is a block diagram illustrating the internal configuration of a mobile phone 10 that is a mobile terminal according to the first embodiment. As shown in Fig. 4, the mobile phone 10 includes a display part 11, a contact detection unit 12, a finger number determination unit 13, a storage unit 14, a hierarchy information collection unit 15, a hierarchy selection unit 16, a command determination unit 17, and a control unit 18.

The display part 11 is composed of a display such as an LCD of the mobile phone 10, and displays information or data that is the result of execution of the control unit 18 with respect to a command that is an instruction determined by the command determination unit 17, depending on the user's input operation detected by the contact detection unit 12.

The contact detection unit 12 is composed of hardware such as a touch panel or the like that is arranged on the display part 11, and detects the user's input operation with respect to the above-described display part 11. The user's input operation includes an action where the finger of the user contacts the display part 11 once, and an action where the finger of the user moves (hereinafter, sometimes described as "drag") in a specified direction in a state where the finger of the user is in contact with the surface of the display part 11.

The contact detection unit 12 detects information on coordinates of the position where the finger of the user contacts the display part 11 (hereinafter, it may be referred to as "contact operation information") and information on coordinates of the position of the finger of the user before and after the finger of the user drags in a specified direction in a state where the finger of the user contacts the display part 11 (hereinafter referred to as "drag operation information"). The contact detection unit 12 outputs contact operation information that is detected depending on the user's input operation to the finger number determination unit 13 and the storage unit 14. Further, the contact detection unit 12 outputs the drag operation information that is detected depending on the user's input operation to the storage unit 14 and the command determination unit 17.

The finger number determination unit 13 is composed of a CPU, a DSP, a ROM, a RAM, and the like, which are built in the mobile phone 10, and acquires the contact operation information output from the contact detection unit 12. The finger number determination unit 13 determines the number of fingers (hereinafter referred to as the "finger number") of the user that contacts the surface of the display part 11 based on the acquired contact operation information. Various methods for determining the finger number are known. For example, the finger number determination unit 13 may determine the number of fingers of the user that contacts the display part 11 based on the total value of current flowing between each top of the contact detection unit 12 that is the touch panel and the contact position of the finger of the user. The finger number determination unit 13 outputs information on the determined number of fingers of the user to the storage unit 14 and the hierarchy selection unit 16. Further, if the number of fingers of the user is unable to be determined, the finger number determination unit 13 outputs information that the number of fingers of the user is unable to be determined to the hierarchy selection unit 16.

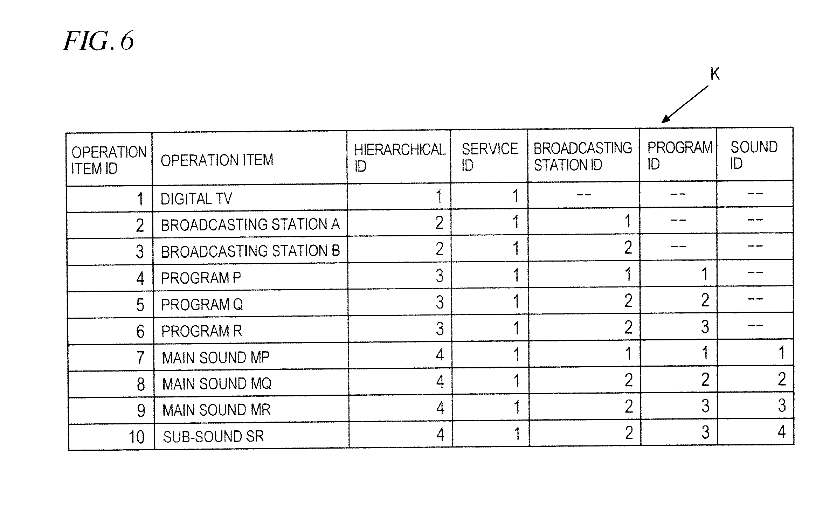

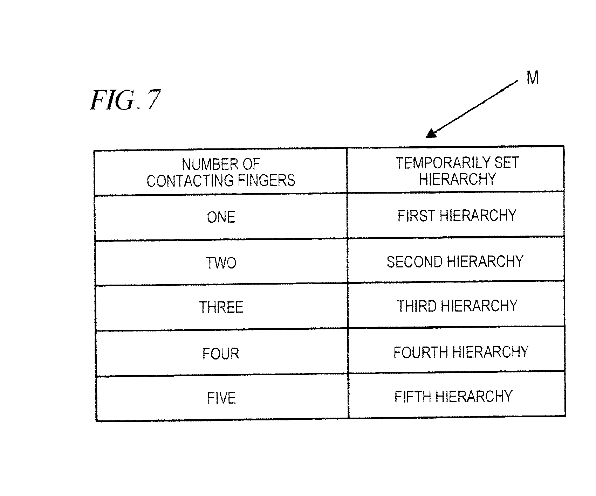

The storage unit 14 is composed of a storage medium such as a ROM, a RAM, a hard disk, or a flash memory, which is built in the mobile phone 10, and a program that prescribes the operations of the finger number determination unit 13, the hierarchy information collection unit 15, the hierarchy selection unit 16, the command determination unit 17, and the control unit 18 is stored in the storage unit 14. Further, the storage unit 14 also operates as a working memory for the operations of the contact detection unit 12, the finger number determination unit 13, the hierarchy information collection unit 15, the hierarchy selection unit 16, the command determination unit 17, and the control unit 18. Further, in the storage unit 14, operation item hierarchy information K to be described later with reference to Fig. 6 and temporarily set hierarchy information M to be described later with reference to Fig. 7 are stored.

The finger number determination unit 13, the hierarchy information collection unit 15, the hierarchy selection unit 16, the command determination unit 17, and the control unit 18 may be configured by hardware or software. In particular, in the case of configuring the respective units by software, the program that prescribes the operations of the finger number determination unit 13, the hierarchy information collection unit 15, the hierarchy selection unit 16, the command determination unit 17, and the control unit 18 is read by the CPU that is built in the mobile phone 10, and thus the finger number determination unit 13, the hierarchy information collection unit 15, the hierarchy selection unit 16, the command determination unit 17, and the control unit 18 become able to operate. Further, In the storage unit 14, it is preferable that an operation item ID that is an identification number of the operation item operated by the user of the mobile phone 10 and a hierarchy ID that indicates a hierarchy to which the operation item ID belongs be temporarily stored in association with each other.

The hierarchy information collection unit 15 includes an antenna 37, a tuner, a CPU, a DSP, a ROM, and a RAM, which are built in the mobile phone 10, and receives digital terrestrial broadcasting waves or BS (Broadcasting Satellite) digital broadcasting waves (hereinafter simply referred to as "digital broadcasting waves"), which are transmitted from the outside. The hierarchy information collection unit 15 extracts a specified frequency signal from the received digital broadcasting waves, and demodulates the extracted signal to form a transport stream.

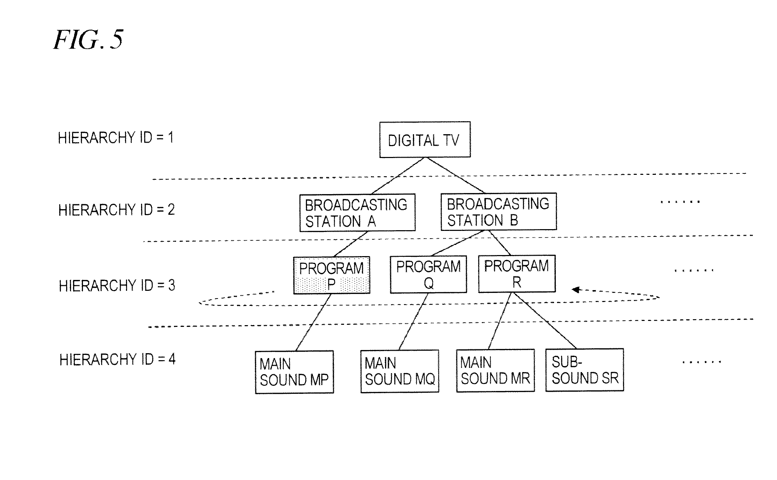

Further, the hierarchy information collection unit 15 extracts PSI/SI (Program Specific Information/Service Information) from the formed transport stream. As described later with reference to Fig. 5, the PSI/SI includes various kinds of information on service name, broadcasting station name, program name, and sound service name of the viewable digital broadcasting waves in the mobile phone 10. The hierarchy information collection unit 15 generates the operation item hierarchy information K to be described later based on the extracted PSI/SI, and stores the generated operation item hierarchy information K in the storage unit 14. Further, the hierarchy information collection unit 15 outputs information that the operation item hierarchy information K has been generated based on the extracted PSI/SI to the hierarchy selection unit 16. Further, the hierarchy information collection unit 15 may output the operation item hierarchy information K itself to the hierarchy selection unit 16.

The hierarchy selection unit 16 acquires the information on the number of fingers of the user determined by the finger number determination unit 13 or information that the number of fingers of the user is unable to be determined. The hierarchy selection unit 16 acquires the information with reference to the contents of the operation item hierarchy information K stored in the storage unit 14 based on the information that the operation item hierarchy information K output from the hierarchy information collection unit 15 has been generated. The hierarchy selection unit 16 directly acquires the operation item hierarchy information K output from the hierarchy information collection unit 15. The hierarchy selection unit 16 temporarily sets the hierarchy that coincides with the number of fingers determined by the finger number determination unit 13, among the operation item hierarchy information K acquired by reference of the storage unit 14 or by the output of the hierarchy information collection unit 15, as the hierarchy to which the operation item that corresponds to the user's input operation detected by the contact detection unit 12 belongs. Further, if the information that the number of fingers of the user is unable to be determined is output from the finger number determination unit 13, the hierarchy selection unit 16 temporarily sets the previously prescribed hierarchy in the operation of the hierarchy selection unit 16 as the hierarchy to which the operation item that corresponds to the user's input operation detected by the contact detection unit 12 belongs.

The hierarchy selection unit 16 determines whether or not the hierarchy of the temporarily set operation item is present in the operation item hierarchy information K acquired by the reference of the storage unit 14 or by the output of the hierarchy information collection unit 15. If it is determined that the hierarchy of the temporarily set operation item is present in the operation item hierarchy information K, the hierarchy selection unit 16 decides upon the hierarchy to which the temporarily set operation item belongs as the hierarchy to which the operation item that corresponds to the user's input operation detected by the contact detection unit 12 belongs. Further, if it is determined that the hierarchy to which the temporarily set operation item belongs is not present in the operation item hierarchy information K, the hierarchy selection unit 16 decides upon the highest rank hierarchy that is one above the hierarchy to which the temporarily set operation item belongs as the hierarchies to which the operation item that corresponds to the user's input operation detected by the contact detection unit 12 belongs. The hierarchy selection unit 16 outputs the hierarchy ID that is the hierarchy information related to the decided hierarchy to the command determination unit 17.

The command determination unit 17 acquires the drag operation information related to the user's input operation detected by the contact detection unit 12 and the hierarchy ID that is the hierarchy information related to the hierarchy decided by the hierarchy selection unit 16. The command determination unit 17 determines the command for the operation item in the decided hierarchy based on the drag operation information related to the acquired user's input operation and the hierarchy ID that is the hierarchy information related to the hierarchy decided by the hierarchy selection unit 16. The command determination unit 17 outputs the information on the decided command to the control unit 18.

The command determination will be described in more detail. The command determination method performed by the command determination unit 17 differs depending on whether or not the hierarchy ID of the hierarchy, to which the operation item ID of the operation item that is currently operated by the user of the mobile phone 10 belongs, coincides with the hierarchy ID of the hierarchy that is decided by the hierarchy selection unit 16. The command determination unit 17 acquires the operation item ID of the operation item that is currently operated by the user of the mobile phone 10 with reference to the storage unit 14, and determines whether or not the hierarchy ID of the hierarchy, to which the operation item ID belongs, coincides with the hierarchy ID of the hierarchy that is decided by the hierarchy selection unit 16. First, the case where the hierarchy ID of the hierarchy, to which the operation item ID of the operation item that is currently operated by the user of the mobile phone 10 belongs, coincides with the hierarchy ID of the hierarchy that is decided by the hierarchy selection unit 16 will be described.

If it is determined that the hierarchy ID of the hierarchy, to which the operation item ID of the operation item that is currently operated belongs, coincides with the hierarchy ID of the hierarchy that is decided by the hierarchy selection unit 16, the command determination unit 17 determines to execute the command with respect to the operation item having the operation item ID that is obtained by decreasing by "1" the operation item ID of the operation item that is currently operated or the operation item having the maximum operation item ID in the hierarchy to which the operation item ID belongs in the case where the drag direction is horizontally leftward or vertically downward. In particular, if the operation item ID of the operation item that is currently operated is the minimum operation item ID of the hierarchy to which the same operation item belongs, the command determination unit 17 determines to execute the command with respect to the operation item having the maximum operation item ID in the hierarchy to which the operation item ID belongs. Further, if it is determined that the hierarchy ID of the hierarchy, to which the operation item ID of the operation item that is currently operated belongs, coincides with the hierarchy ID of the hierarchy that is decided by the hierarchy selection unit 16, the command determination unit 17 determines to execute the command with respect to the operation item having the operation item ID that is obtained by increasing by "1" the operation item ID of the operation item that is currently operated or the operation item having the minimum operation item ID in the hierarchy to which the operation item ID belongs in the case where the drag direction is horizontally rightward or vertically upward. In particular, if the operation item ID of the operation item that is currently operated is the maximum operation item ID of the hierarchy to which the same operation item belongs, the command determination unit 17 determines to execute the command with respect to the operation item having the maximum operation item ID in the hierarchy to which the operation item ID belongs.

Next, the case where the hierarchy ID of the hierarchy, to which the operation item that is currently operated by the user of the mobile phone 10 belongs, does not coincide with the hierarchy ID of the hierarchy that is decided by the hierarchy selection unit 16 will be described.

If it is determined that the hierarchy ID of the hierarchy, to which the operation item ID of the operation item that is currently operated belongs, does not coincide with the hierarchy ID of the hierarchy that is decided by the hierarchy selection unit 16, the command determination unit 17 determines that the command is executed with respect to the operation item of which the operation item ID is maximum in the hierarchy decided by the hierarchy selection unit 16 based on the drag direction of the drag operation information output from the contact detection unit 12 if the corresponding drag direction is the horizontally leftward direction or the vertically downward direction. Further, if the drag direction is the horizontally leftward direction or the vertically downward direction based on the drag direction and the drag distance of the drag operation information and the drag distance β and a predetermined distance α satisfy α<β<2α, the command determination unit 17 may determine that the command is executed with respect to the operation item, which is obtained by decreasing by "1" the operation item ID of the operation item having the maximum operation item ID in the hierarchy decided by the hierarchy selection unit 16.

The predetermined distance α is a drag distance that is required to increase or decrease by "1" the operation ID in the hierarchy decided by the hierarchy selection unit 16. For example, if the drag direction is the horizontally leftward direction and the drag distance β satisfies the relations of 2α<β<3α, the command determination unit 17 determines that the command is executed with respect to the operation item having the operation item ID, which is obtained by decreasing by "2" the operation item ID of the operation item having the maximum operation item ID in the hierarchy decided by the hierarchy selection unit 16. Accordingly, if the drag distance β is smaller than the predetermined distance α, the command determination unit 17 determines that the command is executed with respect to the operation item having the maximum operation item ID in the hierarchy decided by the hierarchy selection unit 16.

Further, if it is determined that the hierarchy ID of the hierarchy, to which the operation item ID of the operation item that is currently operated belongs, does not coincide with the hierarchy ID of the hierarchy that is decided by the hierarchy selection unit 16, the command determination unit 17 determines that the command is executed with respect to the operation item of which the operation item ID is minimum in the hierarchy decided by the hierarchy selection unit 16 based on the drag direction of the drag operation information output from the contact detection unit 12 if the corresponding drag direction is horizontally rightward or vertically upward. Further, if the drag direction is horizontally rightward or vertically upward based on the drag direction and the drag distance of the drag operation information and the drag distance β and a predetermined distance α satisfy α<β<2α, the command determination unit 17 may determine that the command is executed with respect to the operation item, which is obtained by increasing by "1" the operation item ID of the operation item having the minimum operation item ID in the hierarchy decided by the hierarchy selection unit 16.

For example, if the drag direction is the horizontally rightward direction and the drag distance β satisfies the relations of 2α<β<3α, the command determination unit 17 determines that the command is executed with respect to the operation item having the operation item ID, which is obtained by increasing by "2" the operation item ID of the operation item having the minimum operation item ID in the hierarchy decided by the hierarchy selection unit 16. Accordingly, if the drag distance β is smaller than the predetermined distance α, the command determination unit 17 determines that the command is executed with respect to the operation item having the minimum operation item ID in the hierarchy decided by the hierarchy selection unit 16.

The control unit 18 acquires the command determined by the command determination unit 17, and executes the contents according to the acquired command. Further, the control unit 18 controls displaying on the display part 11 the information or data that is a result of the execution of the contents of the command. It is preferable that the contents of the command with respect to each operation item be prescribed in advance in the operation of the command determination unit 17 or the control unit 18.

### 3. Contents of operation item hierarchy information K

Fig. 5 is a schematic diagram schematically illustrating the hierarchical structure of operation item hierarchy information K generated by the hierarchy information collection unit 15. Fig. 6 is an explanatory diagram illustrating operation item hierarchy information K generated by the hierarchy information collection unit 15 in the form of a table. Hereinafter, in order to explain the operation item hierarchy information K clearly, the operation item hierarchy information K in the case of viewing a digital TV with a mobile phone 10 will be described. However, the contents of the operation item hierarchy information K are not limited to the contents in the case of viewing the digital broadcast with the mobile phone 10.

The operation item hierarchy information K is information in which an operation item ID indicating an arbitrary operation item is associated with a hierarchy ID indicating a hierarchy to which the operation item belongs, a service ID indicating a service that can be used by the operation item, a broadcasting station ID indicating a broadcasting station that provides program viewing as a service, a program ID indicating a program that can be viewed through the broadcasting station, and a sound ID indicating an available sound classification in the program.

For example, as shown in Figs. 5 and 6, as the operation item of a hierarchy ID1, only a digital TV of the operation item ID1 is determined. Further, as the operation item of a hierarchy ID2 of the lower rank hierarchy which is one below the digital TV that is the operation item of the hierarchy ID1, a broadcasting station A of the operation item ID2 and a broadcasting station B of the operation item ID3 are determined.

As the operation item of the hierarchy ID1 of the higher rank hierarchy which is one above the broadcasting station A that is the operation item of the hierarchy ID2, the digital TV is determined, and as the operation item of a hierarchy ID3 of the lower rank hierarchy which is one below the broadcasting station A, a program P of an operation item ID4 is determined.

As the operation item of the hierarchy ID2 of the higher rank hierarchy which is one above the program P that is the operation item of the hierarchy ID3, the broadcasting station A is determined, and as the operation item of the hierarchy ID4 of the lower rank hierarchy which is one below the program P, main sound MP of an operation item ID7 is determined.

As the operation item of the hierarchy ID3 of the higher rank hierarchy which is one above the main sound MP that is the operation item of the hierarchy ID4, the program P is determined, and as the lower rank hierarchy that is one below the main sound MP, nothing is determined.

As the operation item of the hierarchy ID1 of the higher rank hierarchy which is one above the broadcasting station B that is the operation item of the hierarchy ID2, the digital TV is determined, and as the operation item of the hierarchy ID3 of the lower rank hierarchy which is one below the broadcasting station B, a program Q of an operation item ID5 and a program R of an operation item ID6 are determined.

As the operation item of the hierarchy ID2 of the higher rank hierarchy which is one above the program Q that is the operation item of the hierarchy ID3, the broadcasting station B is determined, and as the operation item of the hierarchy ID4 of the lower rank hierarchy which is one below the program Q, main sound MQ of an operation item ID8 is determined.

As the operation item of the hierarchy ID3 of the higher rank hierarchy which is one above the main sound MQ that is the operation item of the hierarchy ID4, the program Q is determined, and as the lower rank hierarchy that is one below the main sound MQ, nothing is determined.

As the operation item of the hierarchy ID2 of the higher rank hierarchy which is one above the program R that is the operation item of the hierarchy ID3, the broadcasting station B is determined, and as the operation item of the hierarchy ID4 of the lower rank hierarchy which is one below the program R, main sound MR of an operation item 9 and sub-sound SR of an operation item ID 10 is determined.

As the operation item of the hierarchy ID3 of the higher rank hierarchy which is one above the main sound MR that is the operation item of the hierarchy ID4, the program R is determined, and as the lower rank hierarchy that is one below the main sound MR, nothing is determined.

As the operation item of the hierarchy ID3 of the higher rank hierarchy which is one above the sub-sound SR that is the operation item of the hierarchy ID4, the program R is determined, and as the lower rank hierarchy that is one below the sub-sound SR, nothing is determined.

### 4. Contents of temporarily set hierarchy information M

Fig. 7 is an explanatory diagram illustrating temporarily set hierarchy information M that is stored in the storage unit 14 in the form of a table. The temporarily set hierarchy information M is information that indicates the relations between the finger number when the finger of the user contacts the display part 11 and the hierarchy that is temporarily set by the hierarchy selection unit 16 depending on the finger number.

For example, as shown in Fig. 7, if the finger number is "1" when the finger of the user contacts the display part 11, the hierarchy selection unit 16 temporarily sets a first hierarchy that is the hierarchy ID1 of the operation item hierarchy information K depending on the temporarily set hierarchy information M as the hierarchy to which the operation item for the user's input operation belongs.

If the finger number is "2" when the fingers of the user contact the display part 11, the hierarchy selection unit 16 temporarily sets a second hierarchy that is the hierarchy ID2 of the operation item hierarchy information K depending on the temporarily set hierarchy information M as the hierarchy to which the operation item for the user's input operation belongs.

If the finger number is "3" when the fingers of the user contact the display part 11, the hierarchy selection unit 16 temporarily sets a third hierarchy that is the hierarchy ID3 of the operation item hierarchy information K depending on the temporarily set hierarchy information M as the hierarchy to which the operation item for the user's input operation belongs.

If the finger number is "4" when the fingers of the user contact the display part 11, the hierarchy selection unit 16 temporarily sets a fourth hierarchy that is the hierarchy ID4 of the operation item hierarchy information K depending on the temporarily set hierarchy information M as the hierarchy to which the operation item for the user's input operation belongs.

If the finger number is "5" when the fingers of the user contact the display part 11, the hierarchy selection unit 16 temporarily sets a fifth hierarchy that is the hierarchy ID5 of the operation item hierarchy information K depending on the temporarily set hierarchy information M as the hierarchy to which the operation item for the user's input operation belongs.

### 5. Operation of mobile phone 10 according to the first embodiment

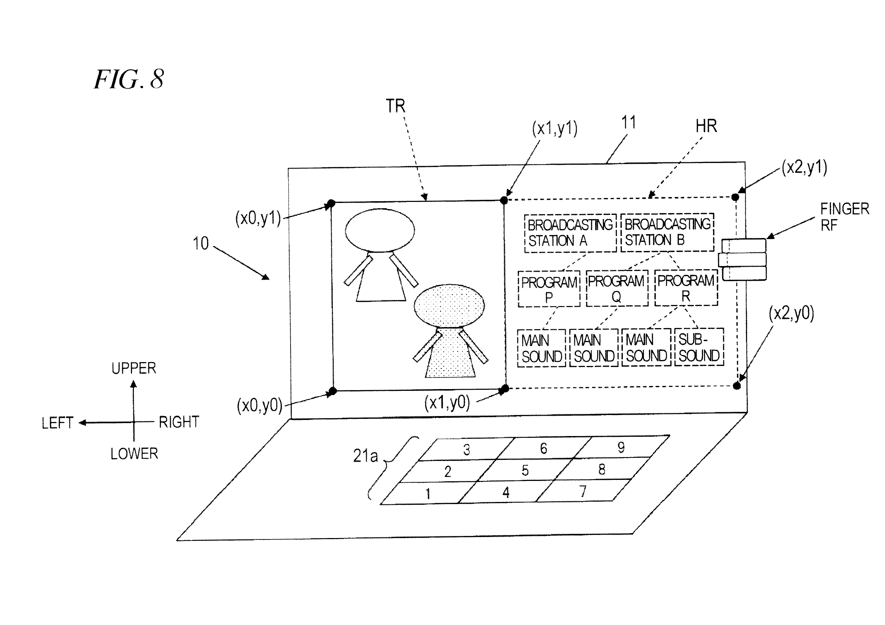

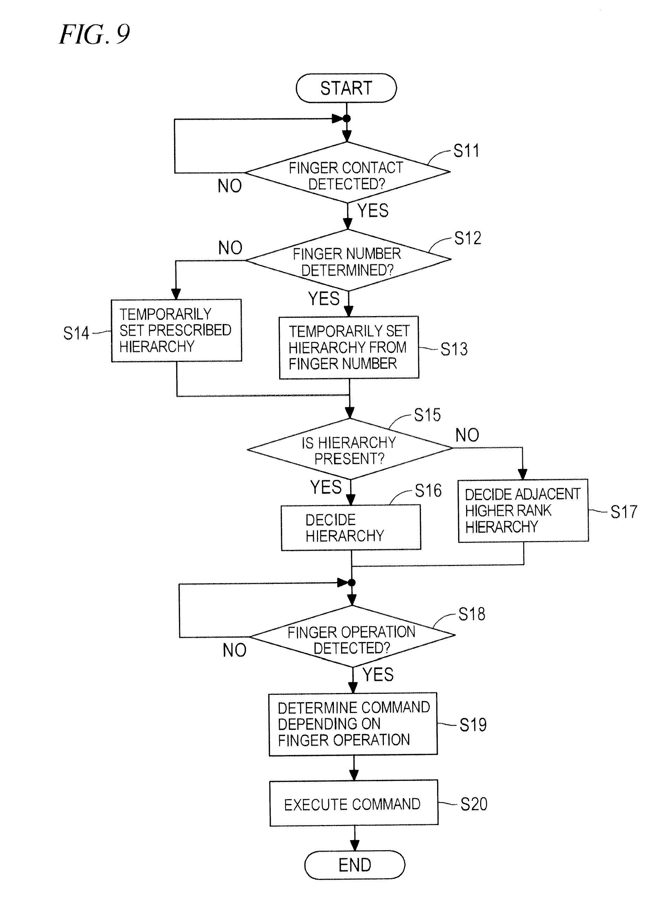

Next, using Figs. 8 and 9, the operation of the mobile phone 10 that is performed depending on the user's input operation according to the first embodiment will be described. Fig. 8 is an explanatory diagram illustrating the operation summary of the mobile phone 10. For example, Fig. 8 shows a state where a user views a program P of a digital TV with the display part 11 of the mobile phone 10. Fig. 9 is a flowchart illustrating the operation of the mobile phone 10.

In Fig. 8, the hierarchy display range HR is a range in which the whole or a part of the operation item hierarchy information K shown in Fig. 5 or 6 is displayed on the display part 11. Further, the hierarchy display range HR is a range that is surrounded by a rectangle having vertices at coordinates (x1, y0), coordinates (x2, y0), coordinates (x1, y1), and coordinates (x2, y1). The coordinate information that indicates the range of the hierarchy display range HR is prescribed in advance in the operation of the control unit 18 or is pre-stored in the storage unit 14. In particular, if the coordinate information that indicates the range of the hierarchy display range HR is stored in the storage unit 14, the control unit 18 acquires the coordinate information from the storage unit 14 and displays the hierarchy display range HR on the display part 11. However, in the first embodiment, it is assumed that the whole or a part of the operation item hierarchy information K is not displayed on the display part 11 by the control unit 18.

In Fig. 8, a DTV (Digital Television) display range TR is a range in which the contents of the digital TV that can be viewed by the mobile phone 10 depending on the digital broadcasting waves received by the hierarchy information collection unit 15 are displayed. Further, the contents of the digital TV are displayed on the display part 11 under the control of the control unit 18. The DTV display range TR is a range that is surrounded by a rectangle having vertices at coordinates (x0, y0), coordinates (x1, y0), coordinates (x0, y1), and coordinates (x1, y1). The coordinate information about the range of the DTV display range TR is prescribed in advance in the operation of the control unit 18 or is pre-stored in the storage unit 14. In particular, if the coordinate information that indicates the range of the DTV display range TR is stored in the storage unit 14, the control unit 18 acquires the coordinate information from the storage unit 14 and displays the DTV display range HR on the display part 11.

As an antecedent of a flowchart illustrated in Fig. 9, the hierarchy information collection unit 15 extracts a signal of a specified frequency from the digital broadcasting waves received by the hierarchy information collection unit 15 and demodulates the extracted signal to form a transport stream. The hierarchy information collection unit 15 extracts the PSI/SI from the formed transport stream. The hierarchy information collection unit 15 generates the operation item hierarchy information K based on the extracted PSI/SI and outputs the generated operation item hierarchy information K to the storage unit 14 and the hierarchy selection unit 16.

The flowchart illustrated in Fig. 9 will be described. In Fig. 9, if the contact detection unit 12 detects a user's input operation that three fingers RF of the user contact an arbitrary position in the range that corresponds to the hierarchy display range HR of the display part 11 as shown in Fig. 8, the contact detection unit 12 detects contact operation information including coordinates of the position in which the three fingers RF of the user contact the display part 11 (S11). The contact detection unit 12 outputs the detected contact operation information to the finger number determination unit 13 and the storage unit 14.

The finger number determination unit 13 acquires the contact operation information output by the contact detection unit 12 and determines the number of fingers RF of the user that contact an arbitrary position of the hierarchy display range HR depending on the acquired contact operation information (S12). As shown in Fig. 8, if the finger number determination unit 13 can determine that the number of the fingers RF of the user is three (YES in S 12), the finger number determination unit 13 outputs information on the determined number of fingers of the user to the storage unit 14 and the hierarchy selection unit 16.

The hierarchy selection unit 16 acquires the operation item hierarchy information K by the information on the number of fingers of the user output by the finger number determination unit 13 and by reference of the storage unit 14, or by the output of the hierarchy information collection unit 15. The hierarchy selection unit 16 temporarily sets the hierarchy that coincides with the finger number determined by the finger number determination unit 13 among the acquired operation item hierarchy information K as the hierarchy to which the operation item that corresponds to the user's input operation detected by the contact detection unit 12 belongs (S13).

On the other hand, if the finger number determination unit 13 is unable to determine the number of fingers RF of the user (NO in S12), the finger number determination unit 13 outputs information on the contents that the finger number is unable to be determined to the hierarchy selection unit 16. In this case, the hierarchy selection unit 16 temporarily sets the previously prescribed hierarchy in the operation of the hierarchy selection unit 16 as the hierarchy to which the operation item that corresponds to the user's input operation detected by the contact detection unit 12 belongs (S14).

The hierarchy selection unit 16 determines whether or not the hierarchy that is temporarily set in step S 13 or S 14 is present in the operation item hierarchy information K (S15). If it is determined that the temporarily set hierarchy is present in the operation item hierarchy information K (YES in S15), the hierarchy selection unit 16 decides upon the hierarchy that is temporarily set in step S13 or S14 as the hierarchy to which the operation item that corresponds to the user's input operation detected by the contact detection unit 12 belongs (S16).

On the other hand, if it is determined that the hierarchy that is temporarily set in step S 13 or S 14 is not present in the operation item hierarchy information K (NO in S15), the hierarchy selection unit 16 decides upon the higher rank hierarchy that is one above the hierarchy to which the operation item temporarily set in step S13 or S14 belongs as the hierarchy to which the operation item that corresponds to the user's input operation detected by the contact detection unit 12 belongs (S17). Further, if the hierarchy information of the higher rank hierarchy that is one above the hierarchy is not present although the higher rank hierarchy that is one above the hierarchy has been exemplified, the hierarchy selection unit 16 may decide the hierarchy information of the higher rank hierarchy that is further one above the hierarchy or the hierarchy information of the highest rank hierarchy as the hierarchy to which the operation item that corresponds to the user's input operation detected by the contact detection unit 12 belongs. Further, it is similar in the following embodiments that if the hierarchy information of the higher rank hierarchy that is one above the hierarchy is not present, the hierarchy selection unit 16 may decide the hierarchy information of the higher rank hierarchy that is further one above the hierarchy or the hierarchy information of the highest rank hierarchy as the hierarchy to which the operation item that corresponds to the user's input operation detected by the contact detection unit 12 belongs.

After the hierarchy to which the operation item belongs is decided in step S16 or S17, the contact detection unit 12 outputs drag operation information to the storage unit 14 and the command determination unit 17 if the contact detection unit 12 detects the user's input operation that the three fingers RF of the user drag in the horizontally leftward direction from a contact position in the hierarchy display range HR of the display part 11 (YES in S 18).

The command determination unit 17 determines the command that is an instruction to be executed based on the drag operation information output by the contact detection unit 12 and the hierarchy to which the operation item decided by the hierarchy selection unit 16 belong (S19). For example, if the user's input operation that drags in the horizontally leftward direction with three fingers is detected, the command determination unit 17 determines that the command is executed with respect to the program R of the operation item having the maximum operation item ID in the third hierarchy of the operation item hierarchy information K decided by the hierarchy selection unit 16, with reference to the operation item ID of the program P that is the operation item being currently operated. It is assumed that as the command for the program R, for example, a command for controlling the display of the program R in a viewable manner is prescribed in advance in the command determination unit 17 or the control unit 18.

The command determination unit 17 instructs the control unit 18 to execute the determined command. In the above-described example, the command determination unit 17 outputs a command for "controlling the display of the program R in a viewable manner" in the current state where the program P is viewed to the control unit 18 depending on the user's input operation that drags with three fingers in the horizontally leftward direction.

The control unit 18 executes the contents of the command instructed in step S19 (S20). In the above-described example, the control unit 18 displays the contents of the program R in the DTV display range TR in a viewable manner to execute the viewing of the program R that is the contents of the command determined by the command determination unit 17.

According to the mobile phone 10 that is a mobile terminal according to the first embodiment, the operation with respect to the operation item having the hierarchical structure can be rapidly executed by a very intuitive, simple and continuous operation. That is, according to the mobile phone 10, the hierarchy, to which the operation item that the user desires to operate belongs, can be easily decided by the number of fingers during the contact operation with respect to the display part 11, and thus the command for the operation item that is desired to be operated among the decided hierarchies can be easily decided depending on the direction of the drag operation that is continuously performed after the contact. Through this, by the operation which is very easy and intuitive to the user and contacts the display part 11 and drags in a specified direction, the mobile phone 10 can rapidly execute the command for the operation item that the user desires to operate.

### [Second embodiment]

### 6. Configuration of a mobile phone 10a according to a second embodiment

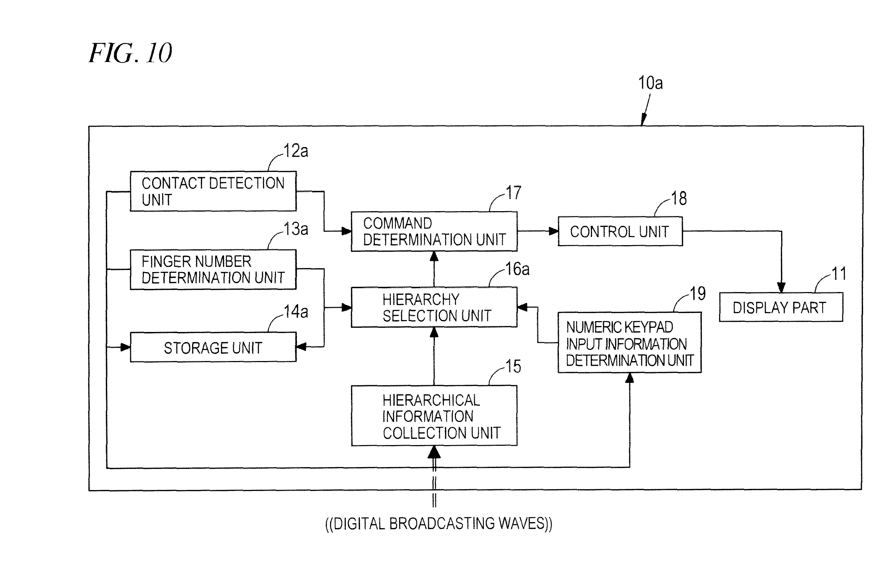

Fig. 10 is a block diagram illustrating the internal configuration of a mobile phone 10a that is a mobile terminal according to the second embodiment. As shown in Fig. 10, the mobile phone 10a includes a display part 11, a contact detection unit 12a, a finger number determination unit 13a, a storage unit 14a, a hierarchy information collection unit 15, a hierarchy selection unit 16a, a command determination unit 17, a control unit 18, and a numeric keypad input information determination unit 19.

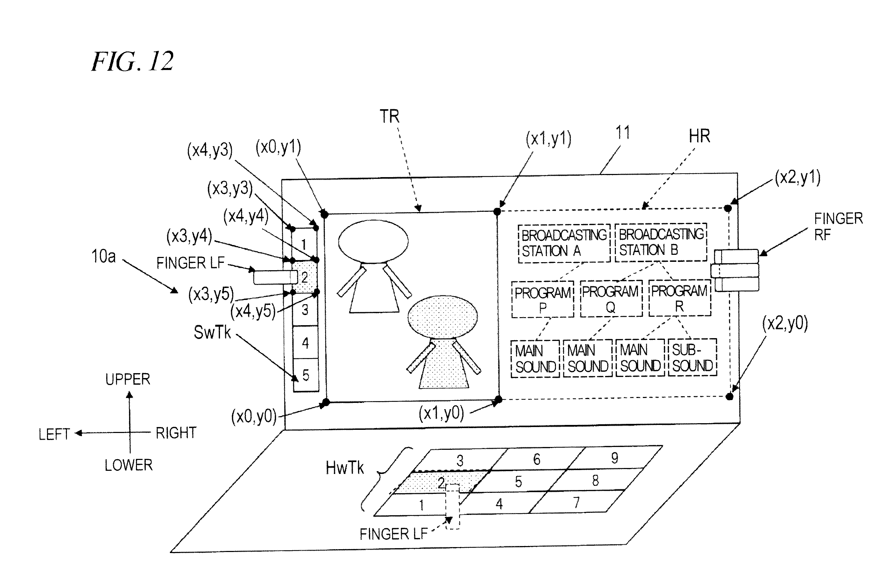

The mobile phone 10a further includes the numeric keypad input information determination unit 19 in comparison to the mobile phone 10 according to the first embodiment. Since the mobile phone 10a is provided with the numeric keypad input information determination unit 19, the contact detection unit 12a, the finger number determination unit 13a, the storage unit 14a, and the hierarchy selection unit 16a in the mobile phone 10a according to the second embodiment operate differently from the contact detection unit 12, the finger number determination unit 13, the storage unit 14, and the hierarchy selection unit 16 in the mobile phone 10 according to the first embodiment. Hereinafter, the operations of the contact detection unit 12a, the finger number determination unit 13a, the numeric keypad input information determination unit 19, the storage unit 14a, and the hierarchy selection unit 16a will be described. Since the configurations of other units are the same as those of the mobile phone 10 according to the first embodiment, the explanation of the same contents will not be repeated. Further, in the display part 11 of the mobile phone 10a that is the mobile terminal according to the second embodiment, a software numeric keypad SwTk is displayed. Here, the software numeric keypad SwTk is a numeric keypad that is displayed on a specified region of the display part 11 by the control unit 18. For example, in Fig. 12, as the software numeric keypad SwTk, a software numeric keypad SwTk, which is composed of five numerical value display regions of numerical value 1, numerical value 2, numerical value 3, numerical value 4, and numerical value 5, is displayed on the display part 11. Further, if any numerical value display region of the software numeric keypad SwTk is touched by the finger of the user, it is considered that the numeric key that corresponds to the hardware numeric keypad HwTk is pushed down. The explanation of the software numeric keypad SwTk is similar as follows.

The contact detection unit 12a is composed of hardware such as a touch panel that is arrange on the display part 11 and a dedicated electronic circuit that can detect the pressing of the hardware numeric keypad HwTk. In addition to the operation of the contact detection unit 12 according to the first embodiment, the contact detection unit 12a outputs the contact operation information depending on the input operation to the finger number determination unit 13a and the numeric keypad input information determination unit 19 when the user's input operation to press or contact the software numeric keypad HwTk and the software numeric keypad SwTk is performed.

The finger number determination unit 13a is composed of a CPU, a DSP, a ROM, a RAM, and the like, which are built in the mobile phone 10, and acquires the contact operation information output from the contact detection unit 12a in addition to the operation of the finger number determination unit 13 according to the first embodiment. The finger number determination unit 13a determines the number of fingers of the user that contact any position of the software numeric keypad SwTk based on the acquired contact operation information. The finger number determination unit 13a outputs information on the determined number of fingers of the user to the storage unit 14a and the numeric keypad input information determination unit 19. Further, if the number of fingers of the user is unable to be determined, the finger number determination unit 13 outputs information that the number of fingers of the user is unable to be determined to the hierarchy selection unit 16.

The numeric keypad input information determination unit 19 is composed of a CPU, a DSP, a ROM, a RAM, and the like, which are built in the mobile phone 10a, and acquires the contact operation information output from the contact detection unit 12a. The numeric keypad input information determination unit 19 determines which one of the hardware numeric keypad HwTk and the software numeric keypad SwTk is pressed or contacted based on the acquired contact operation information and addition numerical value condition information N to be described later. If it is determined that any numeric keypad is pressed or contacted, the numeric keypad input information determination unit 19 outputs the numerical value information of the pressed or contacted numeric keypad to the storage unit 14a and the hierarchy selection unit 16a. In particular, if it is determined that the pressed or touched numeric keypad is the software keypad SwTk, the numeric keypad input information determination unit 19 outputs information on the contents that it is necessary to subtract the numerical value which corresponds to the number of fingers of the user that contact the software numeric keypad SwTk from the numerical value that corresponds to the number of fingers of the user that contact a display region except for the software numeric keypad SwTk of the display part 11 to the storage unit 14a and the hierarchy selection unit 16a.

The storage unit 14a is composed of a storage medium such as a ROM, a RAM, a hard disk, or a flash memory, which is built in the mobile phone 10a, and a program that prescribes in advance the operations of the finger number determination unit 13a, the hierarchy selection unit 16a, and the numeric keypad input information determination unit 19 is stored in the storage unit 14a. Further, the storage unit 14a also operates as a working memory for the operations of the finger number determination unit 13a, the hierarchy selection unit 16a, and the numeric keypad input information determination unit 19. Further, in the storage unit 14a, numerical value information output by the numeric keypad input information determination unit 19 is stored in addition to the information or data that is stored in the storage unit 14 according to the first embodiment. Further, addition hierarchical number condition information N to be described later may be stored in the storage unit 14a.

If numerical value information of any numeric keypad that is pressed or touched is output from the numeric keypad input information determination unit 19, the hierarchy selection unit 16a acquires the numerical value information in addition to the operation of the hierarchy selection unit 16 according to the first embodiment. If the numerical value information is acquired, the hierarchy selection unit 16a temporarily sets the hierarchy which coincides with the numerical value that is obtained by adding the number of fingers determined by the finger number determination unit 13a among the operation item hierarchy information K acquired by reference of the storage unit 14a or by the output of the hierarchy information collection unit 15 to the numerical value information of any numeric keypad that is pressed or contacted as the hierarchy to which the operation item corresponding to the user's input operation detected by the contact detection unit 12a belongs. Hereinafter, in the operation of temporarily setting the hierarchy in the hierarchy selection unit 16a, the numerical value information of the numeric keypad output by the numeric keypad input information determination unit 19 is called "addition numerical value information". Further, if the information on the contents that the number of fingers of the user is unable to be determined is output from the finger number determination unit 13a, the hierarchy selection unit 16a temporarily sets the specified hierarchy previously prescribed in the operation of the hierarchy selection unit 16a as the hierarchy to which the operation item that corresponds to the user's input operation detected by the contact detection unit 12a belongs.

### 7. Contents of addition numerical value condition information N

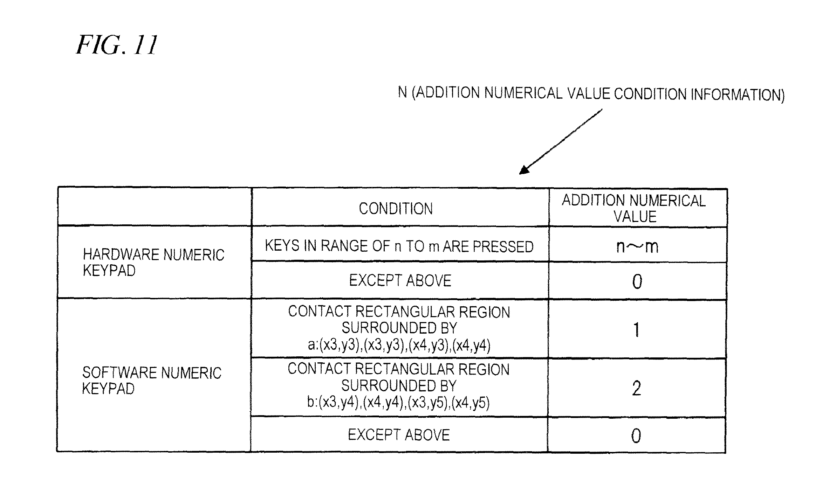

Fig. 11 is an explanatory diagram illustrating the addition numerical value condition information N in the form of a table. The addition numerical value condition information N prescribes the relations between a predetermined condition of pressing or contacting the hardware numeric keypad HwTk or the software numeric keypad SwTk and the addition numerical value information when the predetermined condition is satisfied. The addition numerical value condition information N is previously prescribed in the operation of the numeric keypad input information determination unit 19 or is stored in the storage unit 14a.

In Fig. 11, if a numeric key of number n to number m of the hardware numeric keypad HwTk is pressed, the numerical value of the pressed hardware numeric keypad HwTk becomes the addition numerical value information. Further, in Fig. 11, if the numerical value display region in the range that is surrounded by a rectangle having vertices at coordinates (x3, y3), coordinates (x3, y4), coordinates (x4, y3), and coordinates (x4, y4) of the software numeric keypad SwTk displayed on the display part 11 is contacted, the number that corresponds to the contacted numerical value display region, for example, number 1, becomes the addition numerical value information. Further, in Fig. 11, if the numerical value display region in the range that is surrounded by a rectangle having vertices at coordinates (x3, y4), coordinates (x3, y5), coordinates (x4, y5), and coordinates (x4, y4) of the software numeric keypad SwTk displayed on the display part 11 is pressed, the number that corresponds to the pressed numerical value display region, for example, number 2, becomes the addition numerical value information.

### 8. Operation of mobile phone 10a according to the second embodiment

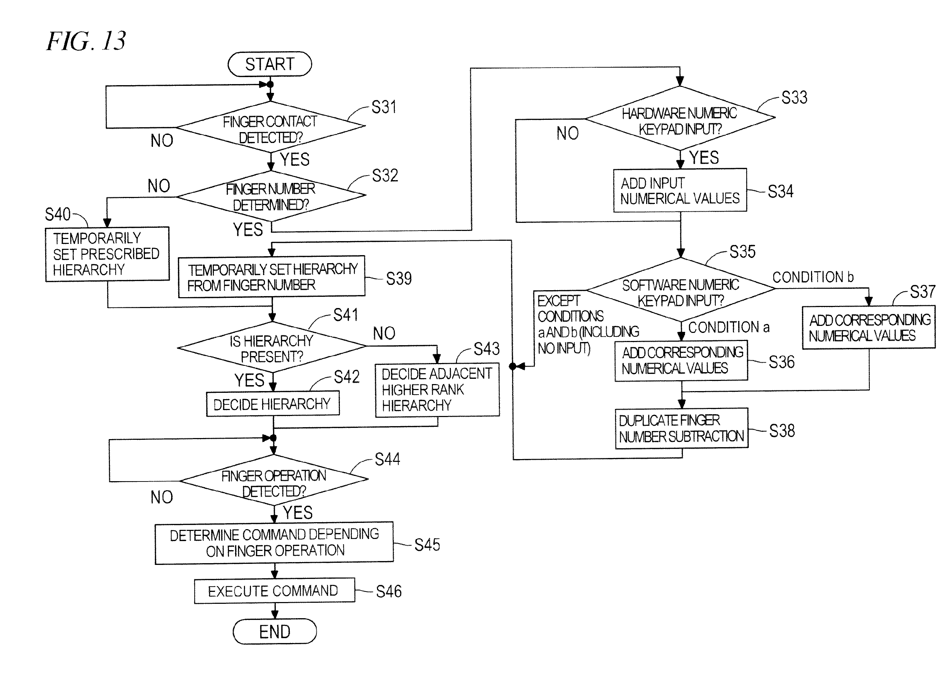

Next, using Figs. 12 and 13, the operation of the mobile phone 10a that is performed depending on the user's input operation according to the second embodiment will be described. Fig. 12 is an explanatory diagram illustrating the operation summary of the mobile phone 10a. For example, Fig. 12 shows a state where a user views a program P of a digital TV with the display part 11 of the mobile phone 10a. Fig. 13 is a flowchart illustrating the operation of the mobile phone 10a.

In Fig. 12, since the hierarchy display range HR and the DTV display range TR are the same as those according to the first embodiment, the explanation of the hierarchy display range HR and the DTV display range TR will not be repeated. In the second embodiment, it is assumed that the whole or a part of the operation item hierarchy information K is not displayed on the display part 11 by the control unit 18. Further, in Fig. 12, at a left end of the display part 11 except for the hierarchy display range HR and the DTV display range TR, the software numeric keypad SwTk is displayed by the control unit 18.

As an antecedent of a flowchart illustrated in Fig. 13, the hierarchy information collection unit 15 extracts a signal of a specified frequency from the digital broadcasting waves received by the hierarchy information collection unit 15 and demodulates the extracted signal to form a transport stream. The hierarchy information collection unit 15 extracts the PSI/SI from the formed transport stream. The hierarchy information collection unit 15 generates the operation item hierarchy information K based on the extracted PSI/SI and outputs the generated operation item hierarchy information K to the storage unit 14a and the hierarchy selection unit 16a.

The flowchart illustrated in Fig. 13 will be described. In Fig. 13, if the contact detection unit 12a detects a user's input operation that three fingers RF of the user contact an arbitrary position in the range that corresponds to the hierarchy display range HR of the display part 11 and the fingers LF of the user contact a numerical value display region of numerical value 2 of the software numeric keypad SwTk of the display part 11 as shown in Fig. 12, the contact detection unit 12a detects contact operation information such as coordinates of the position in which the fingers RF and the fingers LF contact the display part 11 (S31). The contact detection unit 12a outputs the detected contact operation information to the finger number determination unit 13a, the storage unit 14a, and the numeric keypad input information determination unit 19.

The finger number determination unit 13a acquires the contact operation information output by the contact detection unit 12a and determines the number of fingers RF of the user that contact an arbitrary position of the hierarchy display range HR depending on the acquired contact operation information, and the number of fingers LF of the user that contact the numerical value display region of numerical value 2 of the software numeric keypad SwTk (S32). As shown in Fig. 12, if the finger number determination unit 13a can determine that the number of fingers RF of the user is three and the number of fingers LF of the user is one (YES in S32), the finger number determination unit 13a outputs information on the determined number of fingers of the user to the storage unit 14a and the hierarchy selection unit 16a. At this time, the numeric keypad input information determination unit 19 determines whether or not the pressed numerical value information of the hardware numeric keypad HwTk is included in the contact operation information based on the contact operation information output by the contact detection unit 12a and the above-described addition numerical value condition information N (S33).

If it is determined that the pressed numerical value information of the hardware numeric keypad HwTk is included in the contact operation information (YES in S33), the numeric keypad input information determination unit 19 outputs information on the contents that it is necessary to add the numerical value information as the above-described addition numerical value information to the hierarchy selection unit 16a (S34). After step S34 or if it is determined that the pressed numerical value information of the hardware numeric keypad HwTk is not included in the contact operation information (NO in S33), the numeric keypad input information determination unit 19 determines whether or not the contacted numerical value information of the software numeric keypad SwTk is included in the contact operation information based on the contact operation information output by the contact detection unit 12a and the above-described addition numerical value condition information N (S35).

If it is determined that the numerical value information that corresponds to the condition a of the addition numerical value condition information N as shown in Fig. 7 is included in the contact operation information output in step S31 (condition a in S35), the numeric keypad input information determination unit 19 determines that it is necessary to add the contacted numerical value information of the software numerical keypad SwTk as the above-described addition numerical value information (S36). Further, if it is determined that the numerical value information that corresponds to the condition b of the addition numerical value condition information N as shown in Fig. 7 is included in the contact operation information output in step S31 (condition b in S35), the numeric keypad input information determination unit 19 determines that it is necessary to add the contacted numerical value information of the software numerical keypad SwTk as the above-described addition numerical value information (S37). Further, if there is no contact with the software numeric keypad SwTk or it is determined that the contacted numerical value information of the software numeric keypad SwTk that corresponds to the case except for the condition a and the condition b of the addition numerical value condition information N shown in Fig. 7 is included in the contact operation information output in step S31 (S35, except for the conditions a and b (including no input)), step S39 proceeds.

After step S36 or S37, the numeric keypad input information determination unit 19 outputs information on the contents that it is necessary to subtract the numerical value which corresponds to the number of fingers of the user that contact the software numeric keypad SwTk determined by the finger number determination unit 13a from the numerical value that corresponds to the number of fingers of the user that contact the display region except for the software numeric keypad SwTk of the display part 11 to the storage unit 14a and the hierarchy selection unit 16a (S38). Thereafter, step S39 proceeds. Here, the display region except for the software numeric keypad SwTk of the display part 11 corresponds to, for example, the hierarchy display range HR or the DTV display region TR illustrated in Fig. 12.

In step S39, the hierarchy selection unit 16a temporarily sets the hierarchy that coincides with the numerical value obtained by adding the number of fingers determined by the finger number determination unit 13a to the numerical value information of the pressed numeric keypad, among the operation item hierarchy information K acquired by reference of the storage unit 14a or by the output of the hierarchy information collection unit 15, as the hierarchy to which the operation item corresponding to the user's input operation detected by the contact detection unit 12a (S39). Further, in step S32, if the finger number determination unit 13a is unable to determine that the number of fingers RF of the user is three (NO in S32), the finger number determination unit 13a outputs information on the contents that the finger number is unable to be determined to the hierarchy selection unit 16a. In this case, the hierarchy selection unit 16a temporarily sets the previously prescribed hierarchy in the operation of the hierarchy selection unit 16a as the hierarchy to which the operation item that corresponds to the user's input operation detected by the contact detection unit 12a belongs (S40).

The hierarchy selection unit 16a determines whether or not the hierarchy that is temporarily set in step S39 or S40 is present in the operation item hierarchy information K (S41). If it is determined that the temporarily set hierarchy is present in the operation item hierarchy information K (YES in S41), the hierarchy selection unit 16a decides upon the hierarchy that is temporarily set in step S39 or S40 as the hierarchy to which the operation item that corresponds to the user's input operation detected by the contact detection unit 12a belongs (S42).

For example, as shown in Fig. 12, if a user's input operation that three fingers RF of the user contact an arbitrary position in the range that corresponds to the hierarchy display range HR of the display part 11 and the fingers LF of the user contacts a numerical value display region of number 2 of the software numeric keypad SwTk of the display part 11 is detected, the hierarchy selection unit 16a decides the hierarchy to which the operation item corresponding to the input operation belongs as the fourth hierarchy. More specifically, the three fingers RF of the user that contact the region except for the software numeric keypad SwTk are determined by the finger number determination unit 13a, and if the number of fingers LF of the user that contacts the software numeric keypad SwTk is "1" and the numerical value information of the software numeric keypad SwTk is "2", the hierarchy selection unit 16a decides the hierarchy to which the operation item corresponding to the input operation belongs as the fourth hierarchy of the operation item hierarchy information K by performing an operation of "3+2-1" = 4.

Further, if it is determined that the hierarchy that is temporarily set in step S39 or S40 is not present in the operation item hierarchy information K (NO in S41), the hierarchy selection unit 16a decides upon the higher rank hierarchy that is one above the hierarchy of the operation item temporarily set in step S39 or S40 as the hierarchy to which the operation item that corresponds to the user's input operation detected by the contact detection unit 12a belongs (S43).

After the hierarchy to which the operation item belongs is decided in step S42 or S43, the contact detection unit 12a outputs drag operation information to the storage unit 14a and the command determination unit 17 if the contact detection unit 12a detects the user's input operation that the three fingers RF of the user drag in the horizontally leftward direction from a contact position in the hierarchy display range HR of the display part 11 (YES in S44).

The command determination unit 17 determines the command that is an instruction to be executed based on the drag operation information output by the contact detection unit 12a and the hierarchy to which the operation item decided by the hierarchy selection unit 16a belong (S45). For example, if the user's input operation that drags in the horizontally leftward direction with three fingers RF of the user from the contact position in the hierarchy display range HR of the display part 11 is detected, the command determination unit 17 determines that the command is executed with respect to a sub-sound R of the program R of the operation item having the maximum operation item ID in the fourth hierarchy of the operation item hierarchy information K decided by the hierarchy selection unit 16a, with reference to the operation item ID of the program P that is the operation item being currently operated. It is assumed that as the command for the sub-sound R of the program R, for example, a command for controlling the display of the program R by the sub-sound R in a viewable manner has been prescribed in the command determination unit 17 or the control unit 18.

The command determination unit 17 instructs the control unit 18 to execute the determined command. In the above-described example, the command determination unit 17 outputs a command for "controlling the display of the program R by the sub-sound R in a viewable manner" in the current state where the program P is viewed to the control unit 18 depending on the user's input operation that drags with three fingers RF of the user in the horizontally leftward direction from the contact position in the hierarchy display range HR of the display part 11.

The control unit 18 executes the contents of the command instructed in step S19 (S46). In the above-described example, the control unit 18 displays the contents of the program R in the DTV display range TR by the sub-sound R in a viewable manner to execute the viewing of the program R that is the contents of the command determined by the command determination unit 17 by the sub-sound R.

According to the mobile phone 10a that is a mobile terminal according to the second embodiment, in addition to the effect of the mobile phone 10 according to the first embodiment, the operation with respect to the operation item that belongs to a deep hierarchy can be rapidly executed by simultaneously performing a very intuitive, simple and continuous operation such as pressing of the hardware numeric keypad HwTk or the software numeric keypad SwTk even in the case where it is desired to perform the operation with respect to the deep hierarchy that exceeds the number of fingers of the user among the operation item hierarchy information K.

### [Third embodiment]

### 9. Configuration of a mobile phone 10b according to a third embodiment

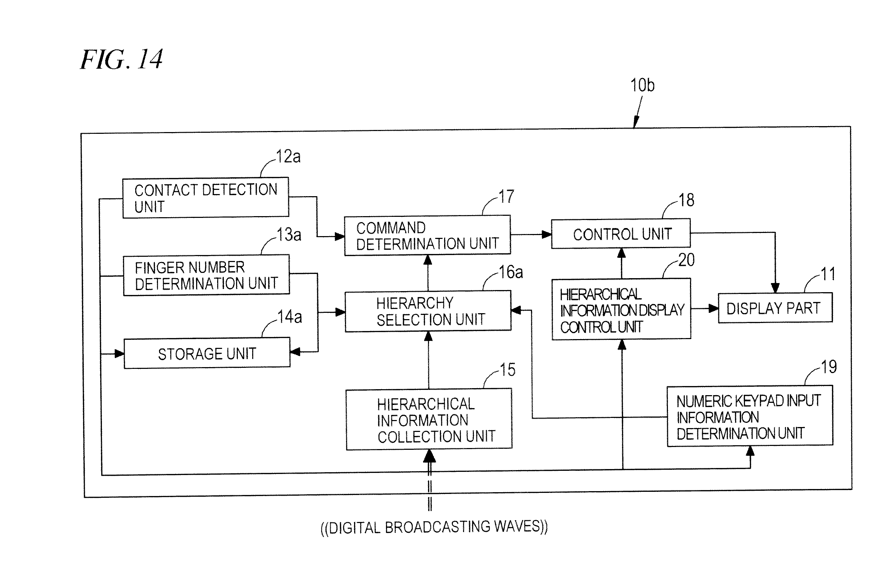

Fig. 14 is a block diagram illustrating the internal configuration of a mobile phone 10b that is a mobile terminal according to the third embodiment. As shown in Fig. 14, the mobile phone 10b includes a display part 11, a contact detection unit 12a, a finger number determination unit 13a, a storage unit 14b, a hierarchy information collection unit 15, a hierarchy selection unit 16a, a command determination unit 17, a control unit 18, a numeric keypad input information determination unit 19, and a hierarchy information display control unit 20.

The mobile phone 10b further includes the hierarchy information display control unit 20 in comparison to the mobile phone 10a according to the second embodiment. Since the mobile phone 10b is provided with the hierarchy information display control unit 20, the storage unit 14b of the mobile phone 10b according to the third embodiment operates differently from the storage unit 14a of the mobile phone 10a according to the second embodiment. Hereinafter, the operations of the hierarchy information display control unit 20 and the storage unit 14b will be described. Since the configurations of other units are the same as those of the mobile phone 10a according to the second embodiment, the explanation of the same contents will not be repeated. Further, in the display part 11 of the mobile phone 10b that is the mobile terminal according to the third embodiment, a software numeric keypad SwTk is displayed.

The hierarchy information display control unit 20 is composed of a CPU, a DSP, a ROM, a RAM, and the like, which are built in the mobile phone 10b, and acquires the contact operation information output from the contact detection unit 12a. The hierarchy information display control unit 20 determines whether or not to display the hierarchy information illustrated in Fig. 5 on the display part 11 based on the acquired contact operation information and display range condition information R to be described later. If it is determined that the hierarchy information is displayed on the display part 11, the hierarchy information display control unit 20 displays the hierarchy information on the display part 11 depending on the condition of the display range of the hierarchy information in the display range condition information R. The details of the display range condition information R will be described later.

The storage unit 14b is composed of a storage medium such as a ROM, a RAM, a hard disk, or a flash memory, which is built in the mobile phone 10b, and a program that prescribes the operation of the hierarchy information display control unit 20 is stored in the storage unit 14b. Further, the storage unit 14b also operates as a working memory for the operation of the hierarchy information display control unit 20. Further, in the storage unit 14b, display range condition information R to be described later may be stored.

### 10. Contents of display range condition information R

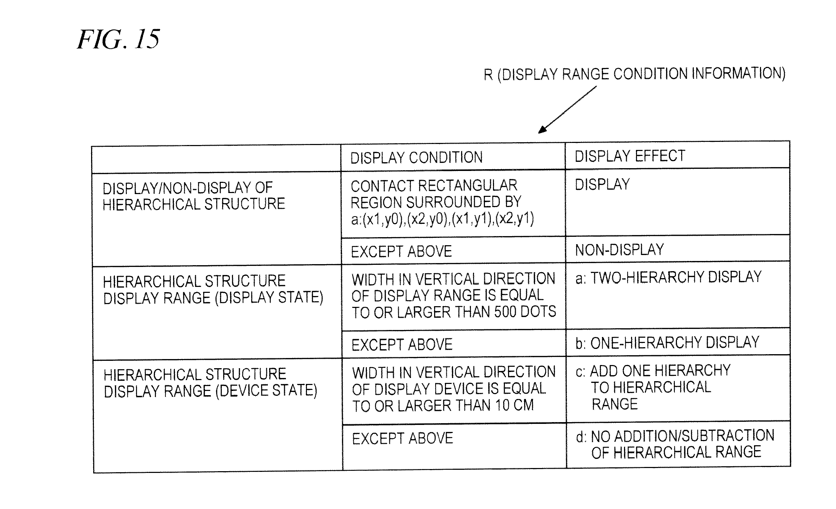

Fig. 15 is an explanatory diagram illustrating display range condition information R. The display range condition information R includes a display condition on which the hierarchy information is displayed on the display part 11, a display condition for the range in which the hierarchy information is displayed, and a display range as a display effect in the case where the display condition for range is satisfied, which are related to each other.

In Fig. 15, if the hierarchy display range HR that is surrounded by a rectangle having vertices at coordinates (x1, y0), coordinates (x2, y0), coordinates (x1, y1), and coordinates (x2, y1) on the display part 11 is contacted by the user's input operation, the hierarchy information display control unit 20 displays the hierarchy information in the hierarchy display range HR of the display part 11. Accordingly, if the hierarchy display range HR that is surrounded by the rectangle is not contacted, the hierarchy information display control unit 20 does not display the hierarchy information in the hierarchy display range HR of the display part 11.

Further, in Fig. 15, if the width in the vertical direction in the hierarchy display range HR of the display part 11 is equal to or larger than 500 dots, the hierarchy information display control unit 20 displays the hierarchy information of two hierarchies as a display effect a. If the width in the vertical direction in the hierarchy display range HR of the display part 11 is smaller than 500 dots, the hierarchy information display control unit 20 displays the hierarchy information of one hierarchy as a display effect b. If the physical width in the vertical direction on the display screen of the mobile phone 10b that is the display part 11 is equal to or larger than 10 cm, the hierarchy information display control unit 20 displays the hierarchy information that is obtained by adding the hierarchy information, which is determined as the display effect a or the display effect b, for one hierarchy more as a display effect c. If the physical width in the vertical direction on the display screen of the mobile phone 10b that is the display part 11 is smaller than 10 cm, the hierarchy information display control unit 20 displays the hierarchy information, which is determined as the display effect a or the display effect b, as a display effect d. In the third embodiment, it is preferable that the width in the vertical direction in the hierarchy display range HR of the display part 11 correspond to the length of the vertical axis of the rectangular region having the vertices at coordinates (x1, y0), coordinates (x2, y0), coordinates (x1, y1), and coordinates (x2, y1), and the coordinates of the respective vertices be stored in the storage unit 14b. Further, it is preferable that information on the physical width in the vertical direction of the display screen of the mobile phone 10b be stored in the storage unit 14b.

### 11. Operation of mobile phone 10b according to the third embodiment

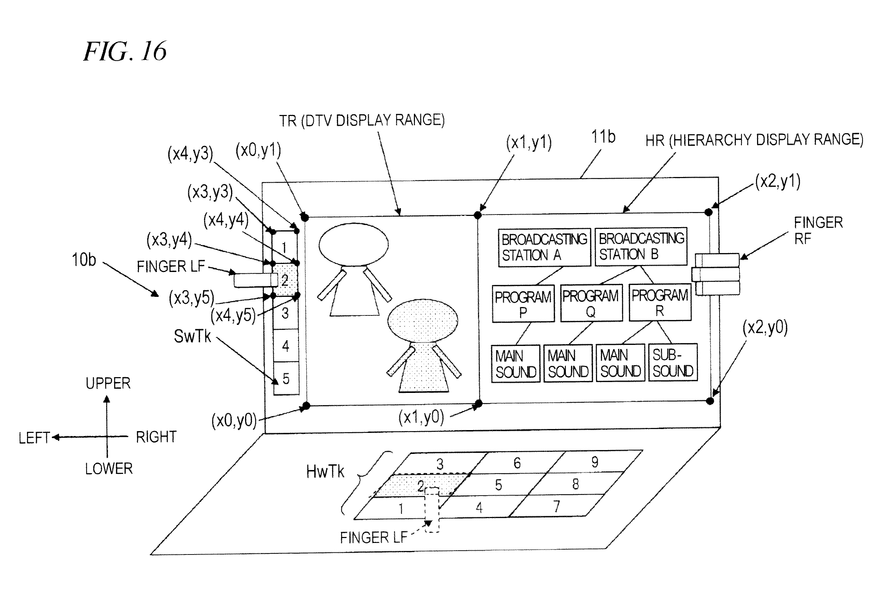

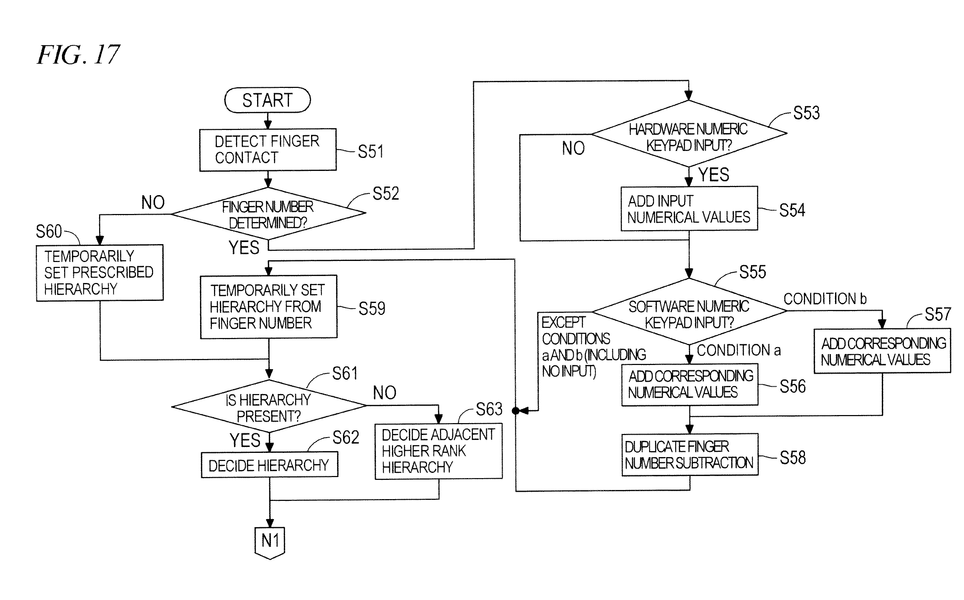

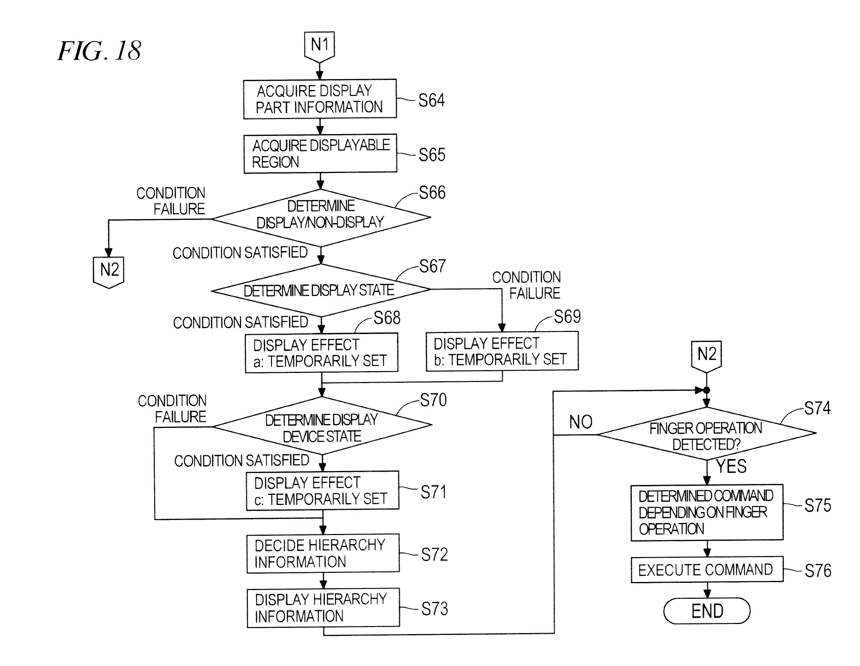

Next, using Figs. 16 to 18, the operation of the mobile phone 10b that is performed depending on the user's input operation according to the third embodiment will be described. Fig. 16 is an explanatory diagram illustrating the operation summary of the mobile phone 10b. For example, Fig. 16 shows a state where a user views a program P of a digital TV with the display part 11 of the mobile phone 10b. Figs. 17 and 18 are flowcharts illustrating the operation of the mobile phone 10b.

In Fig. 16, since the hierarchy display range HR and the DTV display range TR are the same as those according to the second embodiment, the explanation of the hierarchy display range HR and the DTV display range TR will not be repeated. In the third embodiment, the whole or a part of the operation item hierarchy information K is displayed on the display part 11 by the control unit 18. Further, in Fig. 16, at a left end of the display part 11 except for the hierarchy display range HR and the DTV display range TR, the software numeric keypad SwTk is displayed by the control unit 18.

As an antecedent of a flowchart illustrated in Figs. 17 and 18, the hierarchy information collection unit 15 extracts a signal of a specified frequency from the digital broadcasting waves received by the hierarchy information collection unit 15 and demodulates the extracted signal to form a transport stream. The hierarchy information collection unit 15 extracts the PSI/SI from the formed transport stream. The hierarchy information collection unit 15 generates the operation item hierarchy information K based on the extracted PSI/SI and outputs the generated operation item hierarchy information K to the storage unit 14a and the hierarchy selection unit 16a.

The flowcharts illustrated in Figs. 17 and 18 will be described. In Fig. 17, if the contact detection unit 12a detects a user's input operation that three fingers RF of the user contact an arbitrary position in the range that corresponds to the hierarchy display range HR of the display part 11 and the fingers LF of the user contact a numerical value display region of number 2 of the software numeric keypad SwTk of the display part 11 as shown in Fig. 16, the contact detection unit 12a detects contact operation information such as coordinates of the position in which the fingers RF and the fingers LF contact the display part 11 (S51). The contact detection unit 12a outputs the detected contact operation information to the finger number determination unit 13a, the storage unit 14a, and the numeric keypad input information determination unit 19.

The finger number determination unit 13a acquires the contact operation information output by the contact detection unit 12a and determines the number of fingers RF of the user that contact an arbitrary position of the hierarchy display range HR depending on the acquired contact operation information, and the number of fingers LF of the user that contact the numerical value display region of number 2 of the software numeric keypad SwTk (S52). As shown in Fig. 16, if the finger number determination unit 13a can determine that the number of fingers RF of the user is three and the number of fingers LF of the user is one (YES in S52), the finger number determination unit 13a outputs information on the determined number of fingers of the user to the storage unit 14b and the hierarchy selection unit 16a. At this time, the numeric keypad input information determination unit 19 determines whether or not the pressed numerical value information of the hardware numeric keypad HwTk is included in the contact operation information based on the contact operation information output by the contact detection unit 12a and the above-described addition numerical value condition information N (S53).

If it is determined that the pressed numerical value information of the hardware numeric keypad HwTk is included in the contact operation information (YES in S53), the numeric keypad input information determination unit 19 outputs information on the contents that it is necessary to add the numerical value information as the above-described addition numerical value to the hierarchy selection unit 16a (S54). After step S54 or if it is determined that the pressed numerical value information of the hardware numeric keypad HwTk is not included in the contact operation information (NO in S53), the numeric keypad input information determination unit 19 determines whether or not the contacted numerical value information of the software numeric keypad SwTk is included in the contact operation information based on the contact operation information output by the contact detection unit 12a and the above-described addition numerical value condition information N (S55).

If it is determined that the numerical value information that corresponds to the condition a of the addition numerical value condition information N as shown in Fig. 7 is included in the contact operation information output in step S51 (condition a in S55), the numeric keypad input information determination unit 19 determines that it is necessary to add the contacted numerical value information of the software numerical keypad SwTk as the above-described addition numerical value information (S56). Further, if it is determined that the numerical value information that corresponds to the condition b of the addition numerical value condition information N as shown in Fig. 7 is included in the contact operation information output in step S51 (condition b in S55), the numeric keypad input information determination unit 19 determines that it is necessary to add the contacted numerical value information of the software numerical keypad SwTk as the above-described addition numerical value information (S57). Further, if the software numeric keypad SwTk is not pressed or it is determined that the contacted numerical value information of the software numeric keypad SwTk that corresponds to the case except for the condition a and the condition b of the addition numerical value condition information N shown in Fig. 7 is included in the contact operation information output in step S51 (S55, except for the conditions a and b (including no input)), step S59 proceeds.

After step S56 or S57, the numeric keypad input information determination unit 19 outputs information on the contents that it is necessary to subtract the numerical value which corresponds to the number of fingers of the user that press the software numeric keypad SwTk determined by the finger number determination unit 13a from the numerical value that corresponds to the number of fingers of the user that contact the display region except for the software numeric keypad SwTk of the display part 11 to the storage unit 14a and the hierarchy selection unit 16a (S58). Thereafter, step S59 proceeds. Here, the display region except for the software numeric keypad SwTk of the display part 11 corresponds to, for example, the hierarchy display range HR or the DTV display region TR illustrated in Fig. 16.

In step S59, the hierarchy selection unit 16a temporarily sets the hierarchy that coincides with the numerical value obtained by adding the number of fingers determined by the finger number determination unit 13a to any one of the numerical value information of the pressed numeric keypad, among the operation item hierarchy information K acquired by reference of the storage unit 14b or by the output of the hierarchy information collection unit 15, as the hierarchy to which the operation item corresponding to the user's input operation detected by the contact detection unit 12a (S59). Further, in step S52, if the finger number determination unit 13a is unable to determine that the number of fingers RF of the user is three (NO in S52), the finger number determination unit 13a outputs information on the contents that the finger number is unable to be determined to the hierarchy selection unit 16a. In this case, the hierarchy selection unit 16a temporarily sets the previously prescribed hierarchy in the operation of the hierarchy selection unit 16a as the hierarchy to which the operation item that corresponds to the user's input operation detected by the contact detection unit 12a belongs (S60).

The hierarchy selection unit 16a determines whether or not the hierarchy that is temporarily set in step S59 or S60 is present in the operation item hierarchy information K (S61). If it is determined that the temporarily set hierarchy is present in the operation item hierarchy information K (YES in S61), the hierarchy selection unit 16a decides upon the hierarchy that is temporarily set in step S59 or S60 as the hierarchy to which the operation item that corresponds to the user's input operation detected by the contact detection unit 12a belongs (S62).

For example, as shown in Fig. 12, if a user's input operation that three fingers RF of the user contact an arbitrary position in the range that corresponds to the hierarchy display range HR of the display part 11 and the fingers LF of the user contact a numerical value display region of number 2 of the software numeric keypad SwTk of the display part 11 is detected, the hierarchy selection unit 16a decides the hierarchy to which the operation item corresponding to the input operation belongs as the fourth hierarchy. More specifically, the three fingers RF of the user that contact the region except for the software numeric keypad SwTk and the finger number determination unit 13a are determined and if the number of fingers LF of the user that contacts the software numeric keypad SwTk is "1" and the numerical value information of the software numeric keypad SwTk is "2", the hierarchy selection unit 16a decides the hierarchy to which the operation item corresponding to the input operation belongs as the fourth hierarchy of the operation item hierarchy information K by performing an operation of "3+2-1" = 4.

Further, if it is determined that the hierarchy that is temporarily set in step S59 or S60 is not present in the operation item hierarchy information K (NO in S61), the hierarchy selection unit 16a decides upon the higher rank hierarchy that is one above the hierarchy of the operation item temporarily set in step S59 or S60 as the hierarchy to which the operation item that corresponds to the user's input operation detected by the contact detection unit 12a belongs (S63).

After the hierarchy to which the operation item belongs is decided in step S62 or S63, the hierarchy information display control unit 20 acquires information on the physical width in the vertical direction of the display screen of the mobile phone 10b that is the display part 11 by reference of the storage unit 14b (S64). Further, the hierarchy information display control unit 20 acquires information on the width in the vertical direction of the hierarchy display range HR of the display part 11 by reference of the storage unit 14b (S65).

The hierarchy information display control unit 20 determines whether or not the hierarchy information is displayed in the hierarchy display range HR of the display part 11 based on the display range condition information R illustrated in Fig. 15 by reference of the storage unit 14b (S66). Specifically, the hierarchy information display control unit 20 determines whether or not the coordinates of the contact position in the contact operation information detected in step S51 are included in the range that corresponds to the hierarchy display range HR of the display part 11. If it is determined that the coordinates of the contact position are not included (S66, condition failure), step S74 proceeds. Step S74 will be described below.

If it is determined that the coordinates of the contact position are included (S66, condition satisfied) in step S66, the hierarchy information display control unit 20 determines whether or not the width in the vertical direction in the hierarchy display range HR of the display part 11 acquired in step S65 is equal to or larger than 500 dots (S67) based on the display range condition information R.

If it is determined that the width in the vertical direction in the hierarchy display range HR of the display part 11 is equal to or larger than 500 dots (YES in S67), the hierarchy information display control unit 20 temporarily sets the hierarchy information indicated in the hierarchy display range HR of the display part 11 to two hierarchies as the display effect a of the display range condition information R in Fig. 15 (S68).

On the other hand, if it is determined that the width in the vertical direction in the hierarchy display range HR of the display part 11 is smaller than 500 dots (NO in S67), the hierarchy information display control unit 20 temporarily sets the hierarchy information indicated in the hierarchy display range HR of the display part 11 to one hierarchy as the display effect b of the display range condition information R in Fig. 15 (S69).

After the hierarchy information that is displayed in step S68 or S69 is temporarily set, the hierarchy information display control unit 20 determines whether or not the physical width in the vertical direction of the display screen of the mobile phone 10b acquired in step S64 is equal to or larger than 10 cm based on the display range condition information R (S70).

If it is determined that the physical width in the vertical direction of the display screen of the mobile phone 10b is equal to or larger than 10 cm (S70, condition satisfied), the hierarchy information display control unit 20 temporarily sets to display the hierarchy information, which is determined as the display effect a or the display effect b, by adding the hierarchy information for one hierarchy more as the display effect c of the display range condition information R (S71).

If it is determined that the physical width in the vertical direction on the display screen of the mobile phone 10b is smaller than 10 cm (S70, condition failure), or after the hierarchy information is temporarily set in step S7l, step S72 proceeds. The display effect d by the determination in step S70 is as described above.

In step S72, the hierarchy information display control unit 20 decides the display effect a or b of the display range condition information R in Fig. 15 as the hierarchy information of the display range that is determined as the display effect to which the display effect c or d is added (S72). After the hierarchy of the hierarchy information displayed in step S72 is decided, the hierarchy information display control unit 20 displays the decided hierarchy information in the hierarchy display range HR (S73). Then, step S74 proceeds.

In step S74, if the user's input operation that the three fingers RF of the user drag in the horizontally leftward direction from the contact position in the hierarchy display range HR of the display part 11 is detected (YES in S74), the drag operation information is output by the contact detection unit 12a to the storage unit 14b and the command determination unit 17.

The command determination unit 17 determines the command that is an instruction to be executed based on the drag operation information output by the contact detection unit 12a and the hierarchy to which the operation item decided by the hierarchy selection unit 16a belong (S75). For example, if the user's input operation that drags in the horizontally leftward direction with three fingers RF of the user from the contact position in the hierarchy display range HR of the display part 11 is detected, the command determination unit 17 determines that the command is executed with respect to a sub-sound R of the program R of the operation item having the maximum operation item ID in the fourth hierarchy of the operation item hierarchy information K decided by the hierarchy selection unit 16a, with reference to the operation item ID of the program P that is the operation item being currently operated. It is assumed that as the command for the sub-sound R of the program R, for example, a command for controlling the display of the program R by the sub-sound R in a viewable manner has been prescribed in the command determination unit 17 or the control unit 18.

The command determination unit 17 instructs the control unit 18 to execute the determined command. In the above-described example, the command determination unit 17 outputs a command for "controlling the display of the program R by the sub-sound R in a viewable manner" in the current state where the program P is viewed to the control unit 18 depending on the user's input operation that drags with three fingers RF of the user in the horizontally leftward direction from the contact position in the hierarchy display range HR of the display part 11.

The control unit 18 executes the contents of the command instructed in step S19 (S76). In the above-described example, the control unit 18 displays the contents of the program R in the DTV display range TR by the sub-sound R in a viewable manner to execute the viewing of the program R that is the contents of the command determined by the command determination unit 17 by the sub-sound R.

According to the mobile phone 10b that is a mobile terminal according to the third embodiment, in addition to the effect of the mobile phone 10a according to the second embodiment, the hierarchy information is displayed on the display part 11. Even if the whole hierarchy information is unable to be displayed, the recognition of the operation item neighboring the operation item currently operated or higher rank or lower rank hierarchy of the operation item can be promoted. Further, according to the mobile phone 10b, by promoting the recognition of the higher rank or lower rank hierarchy of the operation item, the user's selection of the operation item can be efficiently promoted. Further, according to the mobile phone 10b, since the hierarchy information is displayed in the step of detecting the number of fingers of the user with respect to the display part 11, it is not necessary to separate the display operation of the hierarchy information and the operation of the operation item from each other, and the operation with respect to the operation item of the mobile phone 10b can be rapidly performed by the direct, simple, and continuous operation. Further, according to the mobile phone 10b, the hierarchy information can be appropriately displayed depending on the state of the display that is the display device composed of the display part 11, the size of the hierarchy display range HR in the display part 11, or a combination of the state of the display and the size of the hierarchy display range HR.

### [Modified examples of respective embodiments]

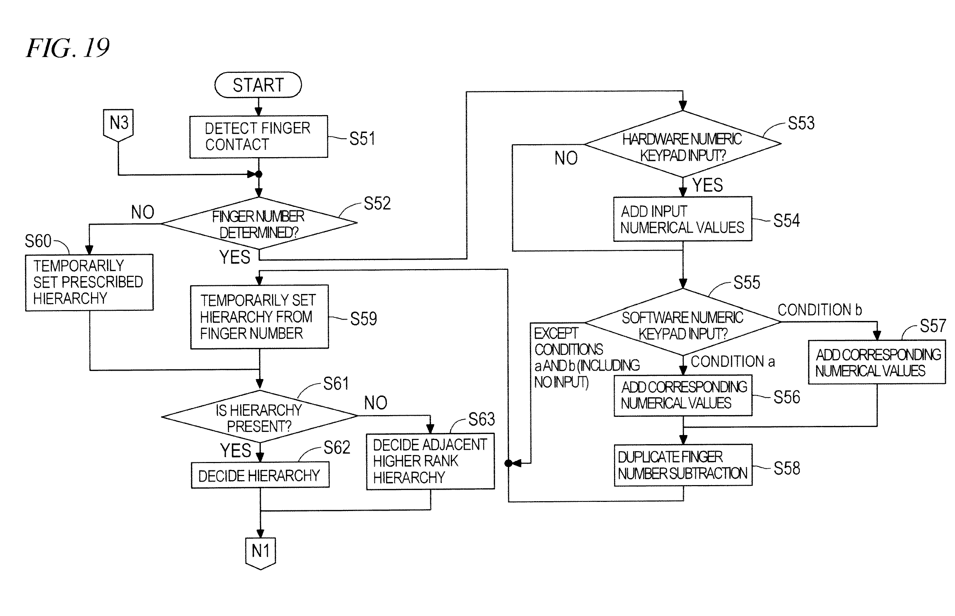

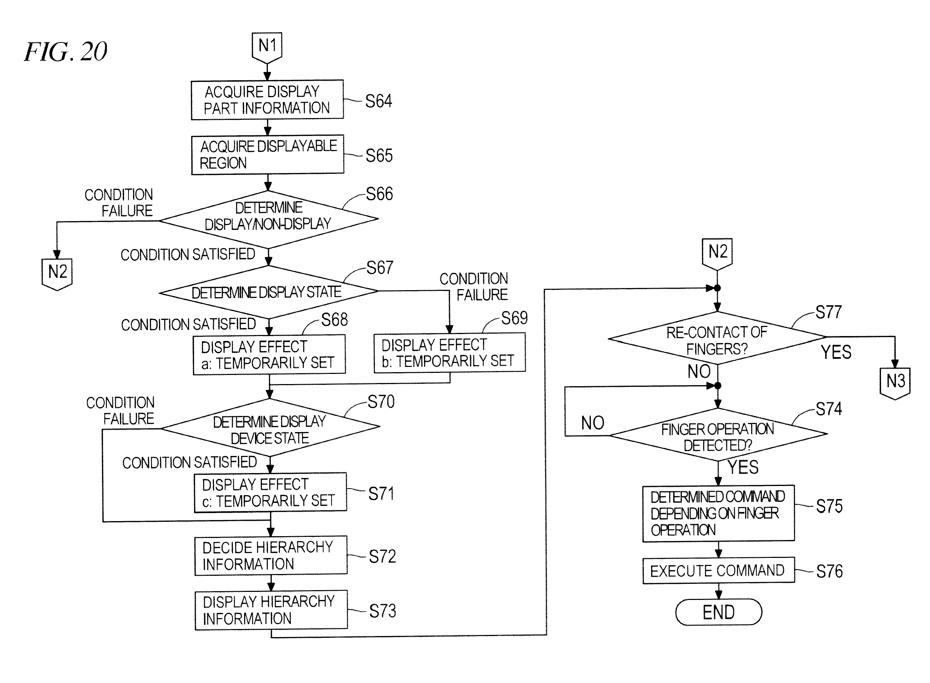

Figs. 19 and 20 are flowcharts illustrating the operation of the mobile phone 10c that is a mobile terminal according to modified examples of the above-described embodiments. In the above-described embodiments, it is assumed that the number of fingers of the user included in the contact operation information detected in step S11 of Fig. 9, S31 of Fig. 13 or S51 of Fig. 17 is not changed until the fingers of the user drag in the specified direction from the contact position of the display part 11. However, the user may take the wrong finger number in contacting the display part 11.

Accordingly, in the case of taking the third embodiment as an example of the above-described embodiments, the modified example of the third embodiment corresponds to a case where the finger number determined in step S52 of Fig. 19 is changed before the fingers drag in step S74. Since the contents of the operation after step S51 of Fig. 19 to step S73 of Fig. 20 are the same as the contents of the operation after step S51 of Fig. 17 to step S73 of Fig. 18, the explanation of the same contents will not be repeated.

In Fig. 20, if it is determined that the coordinates of the contact position in the contact operation information detected in step S51 are not included in the range that corresponds to the hierarchy display range HR of the display part 11, or after step S73, step S77 proceeds. Specifically, in step S77, the mobile phone 10c according to the modified example of the third embodiment determines whether there is the re-contact of the fingers of the user after the hierarchy is decided in step S62 or S63 (S77). That is, in step S77, it is determined whether the finger number determined in step S52 is changed before the dragging in step S74.

If it is determined that there is the re-contact of the fingers of the user (YES in S77), it is necessary for the mobile phone 10c according to the modified example of the third embodiment to determine the finger number for the fingers of the user of which the re-contact is made, and thus step S52 proceeds. If it is determined that there is not the re-contact of the finger of the user (NO in S77), step S74 proceeds. Since the contents of the operation in steps S74 to S76 are the same as the contents of the operation in steps S74 to S76 according to the third embodiment, the explanation of the same contents will not be repeated.

According to the mobile phone 10c of the modified example of the third embodiment, in addition to the effect of the mobile phone 10b according to the third embodiment, the hierarchy to which the operation item operated by the user belongs can be efficiently changed by re-contacting the display part 11 before the fingers of the user drag from the contact position even if the user takes the wrong finger number in contacting the display part 11.

As described above, although various embodiments have been described with reference to the accompanying drawings, it is needless to say that the mobile terminal, the information processing method, and the program according to the present invention are not limited to such embodiments. Various modifications or corrections of the embodiments or combination examples of the various embodiments may be made by those of skilled in the art within the scope described in claims, and it is understood that even such examples belong to the technical range of the present invention.

For example, the mobile phones 10 to 10b that are mobile terminals according to the above-described embodiments are not limited to the mobile phones illustrated in Figs. 1 to 3. For example, even a mobile phone that can slide in the direction that is perpendicular to the thickness direction along the longitudinal direction of the first housing 21 and the second housing 30 can be adopted.

In the second and third embodiments as described above, it has been described that the software numeric keypad SwTk is displayed at the left end of the display part 11 except for the hierarchy display range HR and the DTV display range TR of the display part 11. For example, the software numeric keypad SwTk may be displayed by the control unit 18 as a part of a standby screen when the power of the mobile phones 10a and 10b is turned on to make them in an operable state by the user. Further, the software numeric keypad SwTk may be displayed by the control unit 18 as a part of the standby screen when the digital TV is displayed in the DTV display region TR of the display part 11 by the operation of the mobile phones 10a and 10b. Further, the software numeric keypad SwTk may be displayed by the control unit 18 as a part of a standby screen by the explicit operation of the mobile phones 10a and 10b.

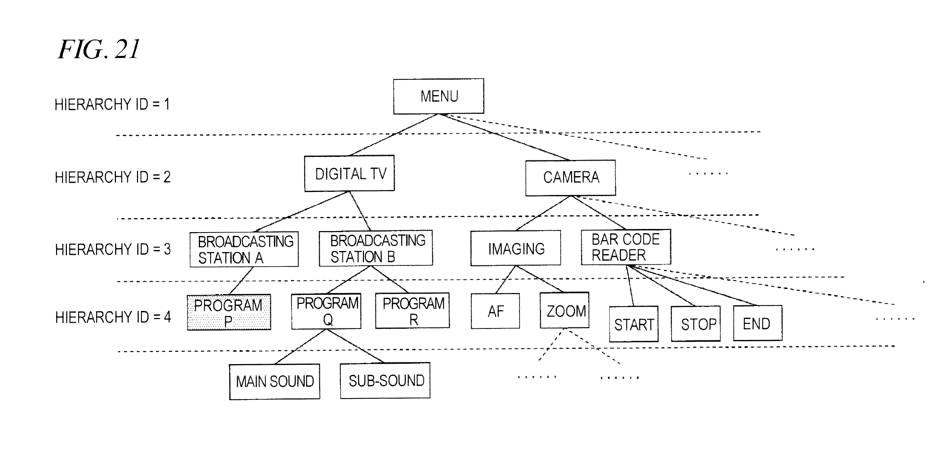

In the above-described embodiments, the operation for the operation item in the case of viewing the digital TV illustrated in Fig. 5 has been described as an example. However, as shown in Fig. 21, since the operation item that can be operated in the mobile phone is not limited to the digital TV, the operation item hierarchy information K may be configured to include an operation item regarding the operation of a camera in addition to the operation item regarding the viewing of the digital TV. Fig. 21 is a schematic diagram illustrating another example of operation items of a mobile phone that is a mobile terminal, which are expressed as a hierarchical structure according to the respective embodiments. Accordingly, the mobile phone that is a mobile terminal according to the present invention can rapidly performs the respective operation items that constitute the operation item hierarchy information K shown in Fig. 21 by an intuitive or simple operation.

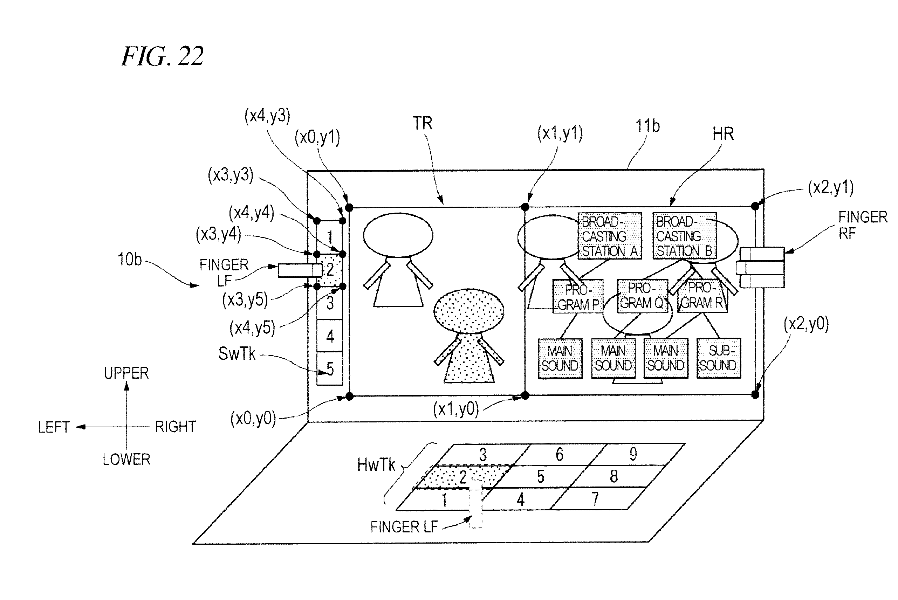

Further, in the above-described embodiments, the hierarchy display range HR and the DTV display range TR are clearly divided in the display part 11. However, as shown in Fig. 22, in the mobile phone that is the mobile terminal according to the present invention, the DTV display range TR in which the digital TV is displayed may partially overlap the hierarchy display range HR. In this case, the control unit 18 of the mobile phone operates to display the hierarchy information in the hierarchy display range HR and to display the digital TV broadcasting contents in the DTV display range TR so that the digital broadcasting contents overlap the hierarchy information. Accordingly, the mobile phone that is the mobile terminal according to the present invention can widely display the broadcasting contents of the digital TV on the display part 11 regardless of the size of the display range of the hierarchy display range HR.

In the above-described embodiments, a mobile phone 10, 10a, or 10b has been exemplified. However, the mobile terminal according to the present invention is not limited to the mobile phone 10, 10a, or 10b, but may be applied to, for example, an electronic device such as a PC (Personal Computer), a digital camera, or the like.

The present application is based on Japanese Patent Application (Japanese Patent Application No. 2010-117295) filed on May 21, 2010, the contents of which are incorporated herein by reference in its entirety.

### Industrial Applicability

The present invention is useful as a mobile terminal, an information processing method, and a program, which can rapidly operate information or data having a hierarchical structure by a simple operation with respect to the information or data.

### Reference Signs List

- 10, 10a, 10b, 10c:: mobile phone
- 11:: display part
- 12, 12a, 12b:: contact detection unit
- 13, 13a, 13b:: finger number determination unit
- 14, 14a, 14b:: storage unit
- 15:: hierarchy information collection unit
- 16, 16a, 16b:: hierarchy selection unit
- 17:: command determination unit
- 18:: control unit
- 19:: numeric keypad input information determination unit
- 20:: hierarchy information display control unit
- 21:: first housing
- 21a:: operation surface
- 22:: microphone
- 24a, 24b:: first housing support portion
- 30:: second housing
- 30a:: display surface
- 30b:: external surface
- 32:: concave portion
- 33:: sound emission unit
- 35:: sub-display part
- 37:: antenna
- 40:: coupling portion
- 41:: first rotary shaft
- 42:: second rotary shaft
- Fky:: function key group
- HR:: hierarchy display range
- HwTk:: hardware numeric keypad
- K:: operation item hierarchy information
- LF, RF:: finger
- M:: temporarily set hierarchy information
- N:: additional numerical value condition information
- R:: display range condition information
- SwTk:: software numeric keypad
- TR:: DTV display range

## Claims

1. A mobile terminal, comprising:
a display part that displays information or data;
a contact detection unit that detects a contact of the display part with fingers of a user;
a finger number determination unit that determines the number of fingers of the user for the contact detected by the contact detection unit;
a storage unit that stores hierarchy information of a plurality of operation items for the information or data; and
a hierarchy selection unit that selects a hierarchy which coincides with the number of fingers detected by the finger number determination unit among the hierarchy information stored in the storage unit, as an operation item for the contact detected by the contact detection unit.

2. The mobile terminal according to claim 1, further comprising:
a command determination unit that instructs a command to change the operation item of the hierarchy selected by the hierarchy selection unit depending on a moving direction of the finger continuously operated to follow the contact detected by the contact detection unit; and
a control unit that executes the command instructed by the command determination unit.

3. The mobile terminal according to claim 1 or 2, further comprising
a hierarchy information collection unit that receives digital broadcasting waves, wherein
the hierarchy information collection unit extracts the hierarchy information for the information or the data that is included in the received digital broadcasting waves, and
the hierarchy selection unit selects, as the operation item, the hierarchy that coincides with the number of fingers detected by the finger number determination unit among the hierarchy information extracted by the hierarchy information collection unit.

4. The mobile terminal according to any one of claims 1 to 3, wherein
if a hierarchy that coincides with the number of fingers detected by the finger number determination unit is not present in the hierarchy information that is stored in the storage unit, the hierarchy selection unit selects a higher rank hierarchy than the hierarchy that corresponds to the number of fingers detected by the finger number determination unit among the hierarchy information stored in the storage unit.

5. The mobile terminal according to any one of claims 1 to 4, further comprising
a numeric keypad input information determination unit which determines whether or not the finger of the user contacts one piece or plural pieces of numerical information on a software numeric keypad that includes the one piece or plural pieces of numerical information when the software numeric keypad is displayed on the display part, wherein
when the numeric keypad input information determination unit determines that the finger of the user contacts the numerical information, the hierarchy selection unit selects a hierarchy from the hierarchy information corresponding to a value obtained by adding the number of fingers detected by the finger number determination unit and the contacted numerical information on the software numeric keypad to each other.

6. The mobile terminal according to claim 5, wherein
the hierarchy selection unit selects a hierarchy that is one below the hierarchy corresponding to the value obtained by adding the number of fingers detected by the finger number determination unit and the contacted numerical information on the software numeric keypad to each other.

7. The mobile terminal according to any one of claims 1 to 6, further comprising
a hierarchy information display control unit that controls the display part to display a hierarchy of a predetermined range including the hierarchy that coincides with the number of fingers detected by the finger number determination unit when the predetermined range on the display part is contacted by the finger of the user.

8. The mobile terminal according to claim 7, wherein
the hierarchy information display control unit controls the display part not to display the hierarchy of a predetermined range on the display part if the predetermined range of the display part is not contacted by the finger of the user.

9. The mobile terminal according to claim 8, wherein
information about a displayable range of the hierarchy information to be displayed on the display part is stored in the storage unit, and
the hierarchy information display control unit acquires the information about the displayable range of the hierarchy information that is stored in the storage unit and displays the hierarchy information depending on the acquired information.

10. The mobile terminal according to claim 9, wherein
information about a physical size of the display part is stored in the storage unit, and
the hierarchy information display control unit acquires the information about the physical size of the display part that is stored in the storage unit and adds a predetermined hierarchical amount to the displayed hierarchy information depending on the acquired information.

11. An information processing method, comprising the steps of:
displaying information or data on a display part;
detecting a contact of the display part with fingers of a user;
detecting the number of fingers of the user for the contact detected;
storing hierarchy information of a plurality of operation items for the information or data in a storage unit; and
selecting a hierarchy which coincides with the detected number of fingers among the hierarchy information stored in the storage unit, as an operation item for the contact detected.

12. A program for causing a mobile terminal that is a computer to implement the steps of:
displaying information or data on a display part;
detecting a contact of the display part with fingers of a user;
detecting the number of fingers of the user for the contact detected;
storing hierarchy information of a plurality of operation items for the information or data in a storage unit; and
selecting a hierarchy which coincides with the detected number of fingers among the hierarchy information stored in the storage unit, as an operation item for the contact detected.
